# EUROPEAN PATENT APPLICATION

(11) **EP 4 553 711 A1**
(43) Date of publication of application: **14.05.2025**
(21) Application number: 23841960.0
(22) Date of filing: 12.06.2023
(51) Int. Cl.: G06N 3/082

(54) **METHOD FOR TRAINING NEURAL NETWORK AND RELATED DEVICE**

(30) Priority: 22.07.2022 CN 202210871003; 08.11.2022 CN 202211391730
(71) Applicant: Huawei Cloud Computing Technologies Co., Ltd., Guiyang, Guizhou 550025 (CN)
(72) Inventor: LONG, Guoping, Guiyang, Guizhou 550025 (CN); ZHONG, Yuanfeng, Guiyang, Guizhou 550025 (CN); LI, Liying, Guiyang, Guizhou 550025 (CN)
(74) Representative: Pfenning, Meinig & Partner mbB
(86) International application number: PCT/CN2023/099689
(87) International publication number: WO 2024/016894

(57) **Abstract**

A method for training a neural network, and a related device are provided. The method may be applied to a scenario in which a neural network is trained in the field of artificial intelligence. The method includes: When an N^{th} round of training of the neural network is being performed, a first computational graph may be obtained, where the first computational graph is one of one or more computational graphs corresponding to the N^{th} round of training of the neural network; and after it is determined that a first compiled code corresponding to the first computational graph has been stored in a system, the first compiled code may be directly executed, where the first compiled code is generated during execution of an M^{th} round of training of the neural network, and M is less than N. Because there is no need to perform an operation of converting the first computational graph into an intermediate representation, and obtaining a compiled code based on the intermediate representation, overheads of computer resources are reduced.

## Description

This application claims priority to Chinese Patent Application No. 202210871003.7, filed with the China National Intellectual Property Administration on July 22, 2022 and entitled "DATA PROCESSING METHOD AND RELATED APPARATUS", and claims priority to Chinese Patent Application No. 202211391730.X, filed with the China National Intellectual Property Administration on November 8, 2022 and entitled "METHOD FOR TRAINING NEURAL NETWORK, AND RELATED DEVICE", which are incorporated herein by reference in their entireties.

### TECHNICAL FIELD

This application relates to the field of artificial intelligence, and in particular, to a method for training a neural network, and a related device.

### BACKGROUND

A first computational graph (computational graph) is a general computation process representation method, is used to describe a directed acyclic graph of a function, and is generally applied to various data processing platforms. In the field of artificial intelligence (Artificial Intelligence, AI), iterative training needs to be performed on a neural network, to convert each round of training of the neural network into a first computational graph, a compiled code corresponding to the first computational graph is obtained, and the compiled code is executed, so that each round of training of the neural network is implemented.

Specifically, in each round of training of the neural network, after a first computational graph corresponding to one round of training of the neural network is obtained, representation conversion (eg. tracing) may be performed on the entire first computational graph to obtain an intermediate representation (intermediate representation, IR) corresponding to the first computational graph. The intermediate representation may also be referred to as a logic description of the first computational graph. A compilation operation is performed on the intermediate representation, to obtain the compiled code corresponding to the first computational graph.

However, in each round of training of the neural network, the first computational graph needs to be first converted into the intermediate representation, and then the compiled code is obtained based on the intermediate representation. This causes overheads of computer resources.

### SUMMARY

Embodiments of this application provide a method for training a neural network, and a related device. When an N^{th} round of training of a first neural network is being performed, because a first compiled code corresponding to a first computational graph has been generated during execution of an M^{th} round of training of the first neural network, it may be determined that the first compiled code corresponding to the first computational graph has been stored in a system, and the first compiled code is directly executed. There is no need to perform an operation of converting the first computational graph into an intermediate representation, and obtaining the first compiled code based on the intermediate representation. This reduces overheads of computer resources.

To resolve the foregoing technical problem, embodiments of this application provide the following technical solutions.

According to a first aspect, an embodiment of this application provides a method for training a neural network, which may be applied to a scenario in which the neural network is trained in the field of artificial intelligence. The method includes: During an N^{th} round of training of a first neural network, after obtaining a first computational graph, a first communication device may determine that a first compiled code (First compiled code) corresponding to the first computational graph has been stored in a system, and executes the first compiled code, where the first compiled code is generated during execution of an M^{th} round of training of the first neural network, both N and M are positive integers, and M is less than N. The N^{th} round of training of the first neural network corresponds to one or more computational graphs. Further, the computational graph is a graphical representation of a computation process, the one or more computational graphs corresponding to the N^{th} round of training of the first neural network are graphical representations of an operation process in the N^{th} round of training of the neural network, and a process of executing the one or more computational graphs corresponding to the N^{th} round of training of the first neural network may be understood as a process of performing the N^{th} round of training of the first neural network. The first computational graph is one of the one or more computational graphs corresponding to the N^{th} round of training of the neural network. In this case, the first computational graph is a graphical representation of a computation process of at least one first step in the N^{th} round of training of the first neural network. For example, one or more first steps corresponding to the first computational graph may include: calculating a value of a loss function, performing backpropagation to generate a gradient value, updating a weight parameter of the first neural network, or the like. The first communication device may be a cloud device, or may be a terminal device.

In this implementation, during execution of the N^{th} round of training of the first neural network, after the first computational graph is obtained, because the first compiled code corresponding to the first computational graph has been generated during execution of the M^{th} round of training of the first neural network, it may be determined that the first compiled code corresponding to the first computational graph has been stored in the system, and the first compiled code is directly executed. In other words, during the N^{th} round of training of the first neural network, there is no need to perform an operation of converting the first computational graph into an intermediate representation, and obtaining the first compiled code based on the intermediate representation. This reduces overheads of computer resources.

In a possible implementation of the first aspect, that the first communication device executes the first compiled code includes: The first communication device may obtain a first mapping relationship from the system, where the first mapping relationship indicates an obtaining location of a value of an input parameter of the first computational graph. Optionally, the input parameter of the first computational graph may include a weight parameter of the first computational graph and a non-training parameter of the first computational graph. In this case, the first mapping relationship may indicate an obtaining location of a value of the weight parameter of the first computational graph and an obtaining location of a value of the non-training parameter of the first computational graph. The first communication device determines, based on the first mapping relationship, the value of the input parameter of the first computational graph during the N^{th} round of training, and executes the first compiled code based on the value of the input parameter of the first computational graph. It should be noted that an operation of determining the "value of the input parameter of the first computational graph" and an operation of executing the" first compiled code" may be performed in a cross manner. For example, during execution of the first compiled code, a value of at least one input parameter of the first computational graph may be determined, and the first compiled code continues to be executed.

In this implementation, the system may further store the first mapping relationship, where the first mapping relationship indicates the obtaining location of the input parameter of the first computational graph. In this way, during execution of the first compiled code, the value of the input parameter of the first computational graph may be directly determined based on the first mapping relationship. This helps increase a speed of obtaining the value of the input parameter of the first computational graph, and further helps accelerate a speed of performing an operation of training the first neural network.

In a possible implementation of the first aspect, before the first communication device obtains the first mapping relationship, the method may further include: If the first mapping relationship is absent in the system, the first communication device may further establish the first mapping relationship, and store the first mapping relationship in the system. The system in which the first communication device is located includes a storage device that can be accessed by the first communication device. The storage device that can be accessed by the first communication device includes an internal memory that can be accessed by the first communication device, and may further include an external memory that can be accessed by the first communication device. In this implementation, when the first mapping relationship is absent in the system, that is, the first mapping relationship cannot be directly obtained from the system, the first mapping relationship may be further established. This ensures feasibility of this solution in various cases, and improves integrity of this solution.

In a possible implementation of the first aspect, the first computational graph is a reusable computational graph. In this implementation, if the first computational graph is not reused, the first compiled code corresponding to the first computational graph is not reused, and storing the first compiled code in the system further causes a waste of storage resources of the system. In this case, if the first computational graph is limited to a reusable computational graph, only a compiled code corresponding to the reusable computational graph is stored in the system, which helps improve utilization of the storage resources of the system.

In a possible implementation of the first aspect, that the first communication device determines that a first compiled code corresponding to the first computational graph has been stored in a system may include: The first communication device performs representation conversion on the first computational graph to obtain an intermediate representation IR corresponding to the first computational graph, and determines, based on the IR corresponding to the first computational graph, that the first compiled code has been stored in the system. Optionally, the first communication device may determine, based on the IR corresponding to the first computational graph, that the first compiled code has been stored in the internal memory included in the system. In this implementation, whether the first compiled code is stored in the system is determined based on the IR corresponding to the first computational graph, so that whether the first compiled code exists in the system can be accurately determined, thereby facilitating successful obtaining of the first compiled code from the system, and improving smoothness of a process of executing the first computational graph.

In a possible implementation of the first aspect, during the M^{th} round of training of the first neural network, the first communication device may also obtain the first computational graph, and the method may further include: After obtaining the first computational graph, the first communication device generates the first compiled code based on the first computational graph, and stores the first compiled code in the system. In this implementation, during execution of the M^{th} round of training of the first neural network, after the first compiled code is generated, the first compiled code is stored in the system, so that when the N^{th} round of training of the first neural network is being performed, the first compiled code can be directly obtained from the system. This improves smoothness of an implementation process of this solution.

In a possible implementation of the first aspect, that the first communication device determines that a first compiled code corresponding to the first computational graph has been stored in a system includes: If determining that the first mapping relationship has been stored in the system, the first communication device may determine that the first compiled code (First compiled code) corresponding to the first computational graph has been stored in the system, where the first mapping relationship indicates the obtaining location of the input parameter of the first computational graph. In this implementation, the first communication device generates the first compiled code in a 1^{st} round of training performed after determining that the first computational graph can be reused, and the first mapping relationship can be established in a 2^{nd} round and subsequent round of training that are performed after determining that the first computational graph can be reused. Therefore, if the first mapping relationship has been stored in the system, there is a high probability that a step of "generating, through a compiler, the first compiled code corresponding to the first computational graph" has been performed, and in this case, the first compiled code corresponding to the first computational graph can be directly obtained from the system. In other words, whether the first compiled code corresponding to the first computational graph exists in the system is determined based on whether the first mapping relationship is established. In this case, there is no need to generate the intermediate representation corresponding to the first computational graph, and query, based on the intermediate representation corresponding to the first computational graph, whether the first compiled code corresponding to the first computational graph exists. According to the foregoing solution, difficulty of the step of "determining whether the first compiled code corresponding to the first computational graph exists in the system" is reduced, the overheads of the computer resources caused by the foregoing determining step are reduced, and a speed of the foregoing determining step is increased. This helps accelerate the speed of performing the operation of training the first neural network.

In a possible implementation of the first aspect, the first computational graph corresponds to a first step in the N^{th} round of training of the first neural network; and after the first communication device executes the first compiled code, the method further includes: The first communication device generates first output data, where the first output data is of a first data structure, the first output data includes at least one piece of input data of a second step in the operation of training the first neural network, the "second step in the operation of training the first neural network" may also be referred to as a downstream task of the "first step in the operation of training the first neural network", the first data structure is a data structure used for performing the second step in the operation of training the first neural network, and the operation of training the first neural network includes the N^{th} round of training of the first neural network. For example, the first output data may be represented as tensor data. The first communication device may generate, based on a first data structure of a tensor, the first output data that can be understood by the downstream task. The first data structure of the tensor may be used to describe a definition of a data member in a tensor form used for performing the second step in the N^{th} round of training of the first neural network, a layout form of the first output data in the internal memory, an internal memory alignment manner used for storing the first output data in the internal memory, or the like. This is not exhaustively enumerated herein. For example, the "definition of a data member in a tensor form" may include a data type of each data member, for example, a 32-bit floating point number (float32) and a 16-bit integer (int16) are different data types; and may further include a size of a tensor corresponding to each data member, and may further define other information of each data member. This is not exhaustively enumerated herein. The layout form of the data in the internal memory may include a storage structure used by the output data in the tensor form in the internal memory. The foregoing storage structure may include a queue, a stack, a linked list, or another storage structure. The example herein is merely intended to facilitate understanding of a concept of the data structure of the tensor, and is not intended to limit this solution.

In this implementation, the first data structure used for the downstream task of the first step in the operation of training the neural network may be further obtained. When the first compiled code corresponding to the first computational graph is executed, output data of the first data structure is generated. In this case, the downstream task does not need to convert the data structure of the first output data when accessing the first output data. This avoids overheads of computer resources caused when same data is converted between different data structures.

In a possible implementation of the first aspect, the first computational graph corresponds to the first step in the N^{th} round of training of the first neural network; and that the first communication device executes the first compiled code may include: The first communication device obtains at least one piece of input data of the first computational graph based on a format of a second data structure, where the at least one piece of input data of the first computational graph exists in second output data of a third step in the operation of training the first neural network, and the second data structure is a data structure used for performing the third step in the operation of training the first neural network. For example, the at least one piece of input data of the first computational graph may be represented as a tensor. The first communication device may understand, based on a second data structure of the tensor, the second output data stored in the internal memory. For example, the second data structure of the tensor may be used to describe a definition of a data member in a tensor form used for performing the third step in the N^{th} round of training of the first neural network, a layout form of the second output data in the internal memory, an internal memory alignment manner used for storing the second output data in the internal memory, or the like. Types of information carried in the second data structure of the tensor are not exhaustively enumerated herein.

In this implementation, the second data structure used for an upstream task of the first step in the operation of training the neural network may be further obtained, and the at least one piece of input data of the first computational graph is obtained from output data of the upstream task based on the format of the second data structure. This avoids overheads of computer resources caused when same data is converted between different data structures.

In a possible implementation of the first aspect, a storage location of the first output data is consistent with a read location of the at least one piece of input data of the second step. Optionally, that "a read location of the at least one piece of input data of the first computational graph in the internal memory is consistent with a storage location of the second output data in the internal memory" may be implemented by using a shared pointer technology. It should be noted that, after reading the at least one piece of input data of the first computational graph, the first communication device does not modify the second output data when executing the first compiled code corresponding to the first computational graph. In this implementation, the read location of the at least one piece of input data of the first computational graph is consistent with the storage location of the second output data, so that copy of same data between different storage locations is avoided, thereby further reducing the overheads of the computer resources.

In a possible implementation of the first aspect, the read location of the at least one piece of input data of the first computational graph is consistent with the storage location of the second output data. Optionally, that "a storage location of the first output data is consistent with a read location of the at least one piece of input data of the second step" may be implemented by using the shared pointer technology. It should be noted that, after the first communication device completes a write operation on the first output data, an ownership of the first output data is transferred to the downstream task. In this implementation, the storage location of the first output data is consistent with the read location of the at least one piece of input data of the second step, so that copy of same data between different storage locations is avoided, thereby further reducing the overheads of the computer resources.

In a possible implementation of the first aspect, the method further includes: The first communication device sends the first output data by invoking a preset interface, where the second step in the operation of training the first neural network includes sending the first output data, the first data structure is a data structure used for performing an operation of sending the first output data, and the preset interface may be an interface of a gradient communication library provided by a third party.

In this implementation, a specific example of the downstream task of the first step in the operation of training the neural network is provided. Communication of the first output data is implemented by invoking the preset interface, which is convenient and convenient. In addition, the first output data of the first data structure is generated. In this way, conversion of the first output data between different data structures is avoided, and efficiency of a process of sending the first output data is improved.

According to a second aspect, an embodiment of this application provides an apparatus for training a neural network, which may be used in a scenario in which the neural network is trained in the field of artificial intelligence. The apparatus for training a neural network includes an obtaining module, a determining module, and an execution module. The obtaining module is configured to obtain a first computational graph, where the first computational graph is one of one or more computational graphs corresponding to an N^{th} round of training of the neural network, and N is a positive integer. The determining module is configured to determine that a first compiled code corresponding to the first computational graph has been stored in a system, where the first compiled code is generated during execution of an M^{th} round of training of the neural network, M is a positive integer, and M is less than N. The execution module is configured to execute the first compiled code.

In the second aspect of this application, the apparatus for training a neural network may be further configured to perform the steps performed by the first communication device in the first aspect and the possible implementations of the first aspect. For specific implementations of the steps, meanings of nouns, and beneficial effects of the possible implementations of the second aspect, refer to the first aspect. Details are not described herein again.

According to a third aspect, an embodiment of this application provides a computer-readable storage medium. The computer-readable storage medium stores a computer program. When the computer program is run on a computer, the computer is enabled to perform the method for training a neural network according to the first aspect.

According to a fourth aspect, an embodiment of this application provides a communication device, including a processor and a memory, where the processor is coupled to the memory, the memory is configured to store a program, and the processor is configured to execute the program in the memory, so that the communication device performs the method for training a neural network according to the first aspect.

According to a fifth aspect, an embodiment of this application provides a computer program product. The computer program product includes a program. When the program is run on a computer, the computer is enabled to perform the method for training a neural network according to the first aspect.

According to a sixth aspect, this application provides a chip system. The chip system includes a processor and is configured to support a terminal device or a communication device in implementing functions in the foregoing aspects, for example, sending or processing data and/or information in the foregoing method. In a possible design, the chip system further includes a memory. The memory is configured to store program instructions and data that are necessary for the terminal device or the communication device. The chip system may include a chip, or may include a chip and another discrete component.

### BRIEF DESCRIPTION OF DRAWINGS

FIG. 1 is a diagram of a structure of an artificial intelligence main framework according to an embodiment of this application;
FIG. 2a is a system architectural diagram of a system for training a neural network according to an embodiment of this application;
FIG. 2b is another system architectural diagram of a system for training a neural network according to an embodiment of this application;
FIG. 2c is a schematic flowchart of a method for training a neural network according to an embodiment of this application;
FIG. 3 is another schematic flowchart of a method for training a neural network according to an embodiment of this application;
FIG. 4 is a diagram of a first computational graph according to an embodiment of this application;
FIG. 5 is another diagram of a first computational graph according to an embodiment of this application;
FIG. 6 is still another diagram of a first computational graph according to an embodiment of this application;
FIG. 7 is yet another diagram of a first computational graph according to an embodiment of this application;
FIG. 8 is still yet another diagram of a first computational graph according to an embodiment of this application;
FIG. 9 is a diagram of an input parameter of a first computational graph according to an embodiment of this application;
FIG. 10 is a schematic flowchart of sending first output data according to an embodiment of this application;
FIG. 11 is still another schematic flowchart of a method for training a neural network according to an embodiment of this application;
FIG. 12 is a diagram of a structure of an apparatus for training a neural network according to an embodiment of this application;
FIG. 13 is another diagram of a structure of an apparatus for training a neural network according to an embodiment of this application;
FIG. 14 is a diagram of a structure of a communication device according to an embodiment of this application;
FIG. 15 is another diagram of a structure of a communication device according to an embodiment of this application; and
FIG. 16 is a diagram of a structure of a chip according to an embodiment of this application.

### DESCRIPTION OF EMBODIMENTS

The following describes embodiments of this application with reference to the accompanying drawings. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

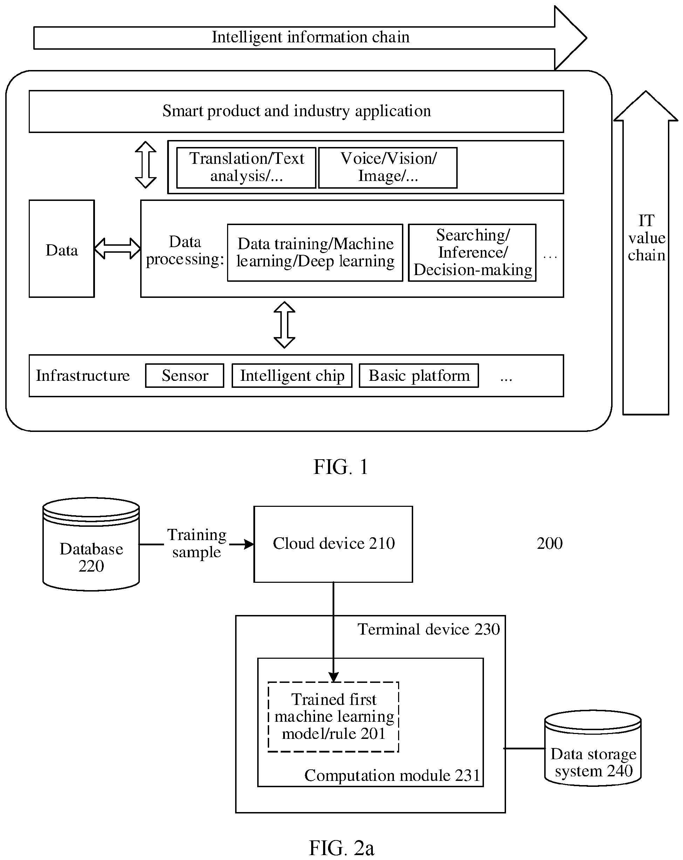

An overall working procedure of an artificial intelligence system is first described. FIG. 1 shows a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support through a basic platform. The infrastructure communicates with the external world through a sensor. A computing capability is provided by an intelligent chip. The intelligent chip may specifically be a hardware acceleration chip such as a central processing unit (central processing unit, CPU), an embedded neural network processing unit (neural network processing unit, NPU), a graphics processing unit (graphics processing unit, GPU), an application-specific integrated circuit (application-specific integrated circuit, ASIC), or a field-programmable gate array (field-programmable gate array, FPGA). The basic platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system provided by the basic platform for computing.

### (2) Data

Data at an upper layer of the infrastructure indicates a data source in the field of artificial intelligence. The data relates to a graph, an image, a speech, and a text, further relates to Internet of Things data of a conventional device, and includes service data of an existing system and perception data such as force, displacement, a liquid level, a temperature, and humidity.

### (3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision-making is a process of making a decision after intelligent information is inferred, and usually provides functions such as classification, ranking, and prediction.

### (4) General capability

After data processing mentioned above is performed on the data, some general capabilities may further be formed based on a data processing result. For example, the general capabilities may be an algorithm or a general system, for example, translation, text analysis, computer vision processing, speech recognition, and image recognition.

### (5) Smart product and industry application

The smart product and the industry application are a product and an application of the artificial intelligence system in various fields, and are package of an overall solution of artificial intelligence, so that decision-making for intelligent information is productized and an application is implemented. Application fields thereof mainly include a smart terminal, smart manufacturing, smart transportation, smart home, smart health care, smart security protection, autonomous driving, a smart city, and the like.

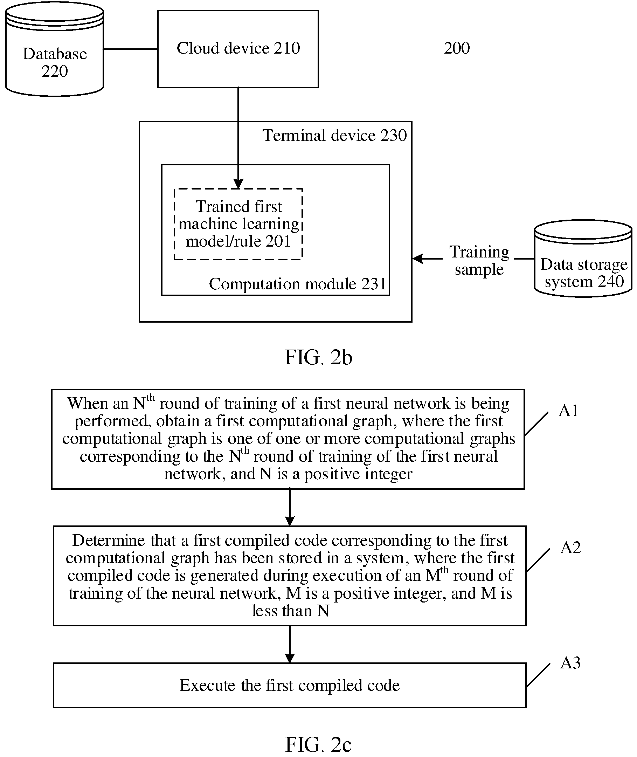

This application may be applied to a process of training a neural network. The neural network may be a neural network in any application field of an artificial intelligence system. Before a method for training a neural network provided in embodiments of this application is described, refer to FIG. 2a and FIG. 2b first. FIG. 2a and FIG. 2b are two system architectural diagrams of systems for training a neural network according to embodiments of this application.

In an application scenario, refer to FIG. 2a first. A system for training a neural network 200 may include a cloud device 210, a database 220, a terminal device 230, and a data storage system 240. The terminal device 230 includes a computation module 231. In FIG. 2a, an example in which the cloud device 210 performs an operation of training a first machine learning model/rule 201 is used.

The cloud device 210 may be implemented by one or more servers. The database 220 stores a training sample. The cloud device 210 generates the first machine learning model/rule 201, and performs iterative training on the first machine learning model/rule 201 by using the training sample, to obtain a trained first machine learning model/rule 201. The first machine learning model/rule 201 may be specifically represented as a neural network, or may be represented as a non-neural network model. In this embodiment of this application, descriptions are provided only by using an example in which the first machine learning model/rule 201 is represented as a first neural network.

The cloud device 210 configures the trained first machine learning model/rule 201 in the computation module 231 of the terminal device 230. For example, the terminal device 230 may be a mobile phone, a tablet, a notebook computer, a VR device, a monitoring system, or a radar data processing system. The terminal device 230 may invoke data, code, and the like in the data storage system 240, or may store data, instructions, and the like in the data storage system 240. The data storage system 240 may be disposed in the terminal device 230, or the data storage system 240 may be an external memory relative to the terminal device 230. The first machine learning model/rule 201 in the terminal device 230 is configured to process input data, to obtain prediction information corresponding to the input data.

In another application scenario, refer to FIG. 2b. A system for training a neural network 200 may include a cloud device 210, a database 220, a terminal device 230, and a data storage system 240. The terminal device 230 includes a computation module 231. In FIG. 2b, an example in which the cloud device 210 and a plurality of terminal devices 230 jointly perform an operation of training a first machine learning model/rule 201 is used.

The data storage system 240 may store a training data set. Each terminal device 230 may perform iterative training on the first machine learning model/rule 201 based on a training sample in the data storage system 240, to obtain a first gradient value corresponding to a weight parameter in the first machine learning model/rule 201. In an implementation, each terminal device 230 may send the first gradient value to the cloud device 210. The cloud device 210 aggregates first gradient values uploaded by the plurality of terminal devices 230 to obtain a second gradient value corresponding to the weight parameter in the first machine learning model/rule 201, and sends the second gradient value to each terminal device 230. Each terminal device 230 updates the weight parameter in the first machine learning model/rule 201 based on the second gradient value, to implement iterative training on the first machine learning model/rule 201. It should be noted that the first machine learning model/rule 201 may be further trained in another manner. FIG. 2a and FIG. 2b are merely two examples for ease of understanding of this solution, and are not intended to limit this solution.

Based on the foregoing descriptions, this application provides a method for training a neural network. The method for training a neural network may be applied to a process in which the cloud device 210 trains the first machine learning model/rule 201 by using the training data set, or may be applied to a process in which the terminal device 230 trains the first machine learning model/rule 201 by using the training data set. Specifically, refer to FIG. 2c. FIG. 2c is a schematic flowchart of a method for training a neural network according to an embodiment of this application. A1: When an N^{th} round of training of the neural network (where for ease of description, the neural network is referred to as a "first neural network" hereinafter) is being performed, a first communication device may obtain a first computational graph, where the first computational graph is one of one or more computational graphs corresponding to the N^{th} round of training of the first neural network, and N is a positive integer. Further, the computational graph is a graphical representation of a computation process, the one or more computational graphs corresponding to the N^{th} round of training of the first neural network are graphical representations of an operation process in the N^{th} round of training of the neural network, and a process of executing the one or more computational graphs corresponding to the N^{th} round of training of the first neural network may be understood as a process of performing the N^{th} round of training of the first neural network. The first computational graph is one of the one or more computational graphs corresponding to the N^{th} round of training of the first neural network. For a meaning of the "first computational graph", refer to the foregoing explanation of a meaning of the "one or more computational graphs corresponding to the N^{th} round of training of the first neural network". A2: After obtaining the first computational graph, the first communication device may determine that a first compiled code (First compiled code) corresponding to the first computational graph has been stored in a system, where the first compiled code is generated during execution of an M^{th} round of training of the neural network, M is a positive integer, and M is less than N. A3: The first communication device executes the first compiled code.

In this embodiment of this application, when the N^{th} round of training of the first neural network is being performed, there is no need to perform an operation of converting the first computational graph into an intermediate representation, and obtaining the compiled code based on the intermediate representation. This reduces overheads of computer resources.

With reference to the foregoing descriptions, the following describes a specific implementation procedure of the method for training a neural network provided in this embodiment of this application. Because a step of "training the first neural network based on training data" may be performed by the cloud device 210, or may be performed by the terminal device 230, the two cases are separately described below.

### 1. The cloud device performs an operation of training the first neural network

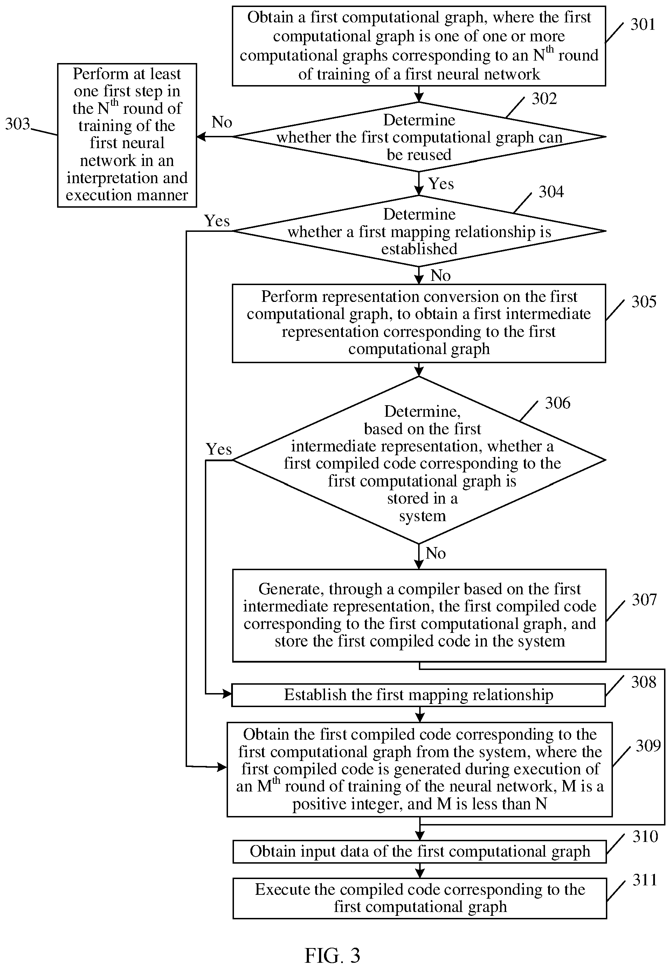

In this embodiment of this application, specifically, refer to FIG. 3. FIG. 3 is another schematic flowchart of a method for training a neural network according to an embodiment of this application. The method for training a neural network provided in this embodiment of this application may include the following steps.

301: Obtain a first computational graph, where the first computational graph is one of one or more computational graphs corresponding to an N^{th} round of training of the neural network.

In this embodiment of this application, when the N^{th} round of training of the first neural network is being performed, a first communication device may obtain the first computational graph. The N^{th} round of training of the first neural network corresponds to one or more computational graphs, and the one or more computational graphs include the first computational graph. In other words, the first computational graph is one of the one or more computational graphs corresponding to the N^{th} round of training of the neural network, and N is a positive integer. For example, the first computational graph corresponds to at least one first step in the N^{th} round of training of the first neural network. The first communication device may be a processor in the cloud device. For example, the first communication device may be a neural network processing unit in the cloud device. For another example, the first communication device may be a graphics processing unit in the cloud device. For still another example, the first communication device may be a central processing unit or the like in the cloud device. This may be specifically determined with reference to an actual application scenario flexibly, and is not limited herein.

One round of training of the first neural network may include one or more training operations on the first neural network. The plurality of training operations may include a plurality of training operations performed on the first neural network by using a batch (batch) of or a plurality of batches (batches) of training samples. Each batch (batch) of training samples includes a plurality of training samples.

Further, the computational graph is a graphical representation of a computation process, optionally, the one or more computational graphs corresponding to the N^{th} round of training of the first neural network are graphical representations of an operation process in the N^{th} round of training of the neural network, and a process of executing the one or more computational graphs corresponding to the N^{th} round of training of the first neural network may be understood as a process of performing the N^{th} round of training of the first neural network. The first computational graph is a graphical representation of one or more first steps in the N^{th} round of training of the first neural network, and a process of executing the first computational graph may be understood as implementing the one or more first steps in the N^{th} round of training of the first neural network.

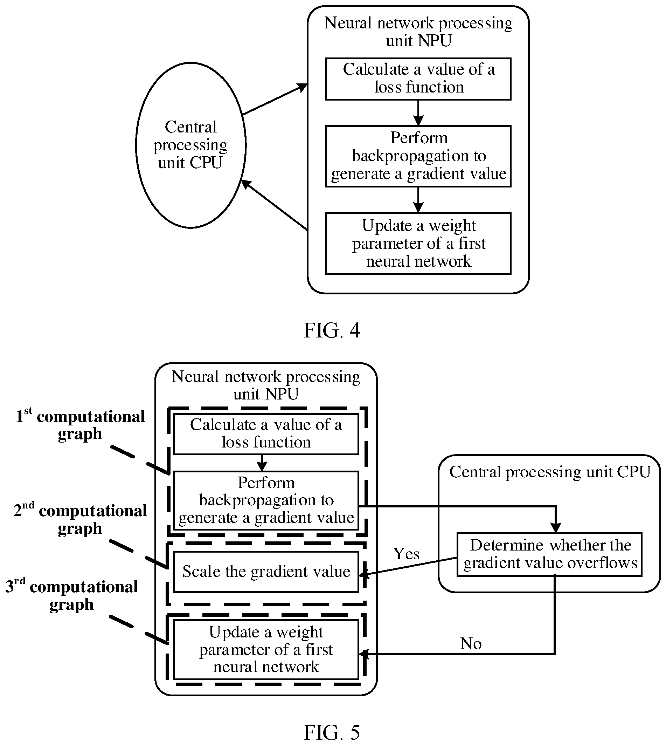

Further, in a case, the first computational graph is a graphical representation of all steps in the N^{th} round of training of the first neural network. For more intuitive understanding of this solution, refer to FIG. 4. FIG. 4 is a diagram of a first computational graph according to an embodiment of this application. As shown in FIG. 4, a system for training a first neural network includes one CPU and one NPU. The NPU performs all steps in each round of training of the first neural network. One or more first steps corresponding to the first computational graph executed by the NPU may include: calculating a value of a loss function, performing backpropagation to generate a gradient value, and updating a weight parameter of the first neural network, where the weight parameter of the first neural network may also be referred to as a training parameter of the first neural network. In FIG. 4, each round of training of the first neural network may include performing one training operation on the first neural network, or may include performing a plurality of training operations on the first neural network by using a batch of training samples. It should be understood that the example in FIG. 4 is merely for ease of understanding this solution, and is not intended to limit this solution.

In another case, an N^{th} round of training of the first neural network corresponds to a plurality of computational graphs, and the first computational graph is one of the plurality of computational graphs. In other words, the first computational graph is a graphical representation of some steps in the N^{th} round of training of the first neural network. Specifically, after obtaining a second computational graph corresponding to the N^{th} round of training of the first neural network, the first communication device or another communication device other than the first communication device may obtain the plurality of computational graphs corresponding to the N^{th} round of training of the first neural network. The second computational graph corresponding to the operation of training the first neural network is a graphical representation of all steps in the N^{th} round of training of the first neural network, and each of the plurality of computational graphs corresponding to the N^{th} round of training of the first neural network is a subgraph of the second computational graph. In this case, the first computational graph is also a subgraph of the second computational graph, that is, the first computational graph is a graphical representation of some steps in the N^{th} round of training of the first neural network.

For more intuitive understanding of this solution, refer to FIG. 5 to FIG. 8. FIG. 5 to FIG. 8 are a plurality of diagrams of a first computational graph according to embodiments of this application. Refer to FIG. 5 first. In FIG. 5, an example in which a system for training a first neural network includes one CPU and one NPU is used. In FIG. 5, for example, there may be three computational graphs. The first computational graph may be any one of the three computational graphs. When executing a 1^{st} computational graph, the NPU is configured to generate a function value of a loss function of the first neural network, and calculate, based on the function value of the loss function, a gradient value corresponding to a weight parameter of the first neural network. The CPU determines whether the gradient value of the weight parameter of the first neural network overflows. If a determining result is that the gradient value of the weight parameter of the first neural network overflows, the NPU is triggered to execute a 2^{nd} computational graph, where the 2^{nd} computational graph indicates to scale the gradient value of the weight parameter of the first neural network; or if a determining result is that the gradient value of the weight parameter of the first neural network does not overflow, the NPU is triggered to execute a 3^{rd} computational graph, where the 3^{rd} computational graph indicates to update the weight parameter of the first neural network. It should be noted that, in FIG. 5, an example in which the 1^{st} computational graph, the 2^{nd} computational graph, and the 3^{rd} computational graph are all executed by a same NPU is used. In another application scenario, the 1^{st} computational graph, the 2^{nd} computational graph, and the 3^{rd} computational graph may be executed by different NPUs. The example in FIG. 5 is merely for ease of understanding of this solution, and is not intended to limit this solution.

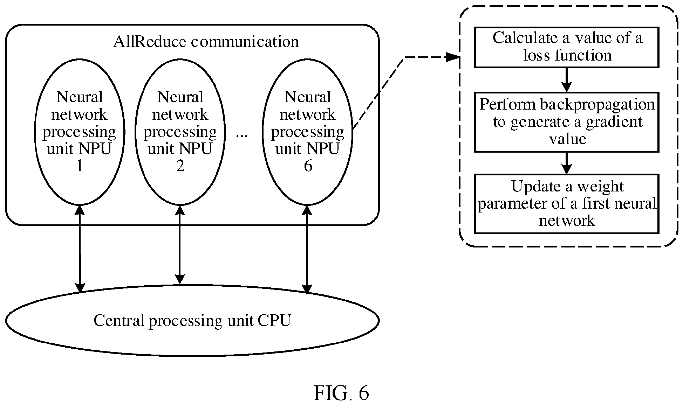

Further, refer to FIG. 6. In FIG. 6, an example in which a system for training a first neural network includes one CPU and a plurality of NPUs (namely, an NPU 1, an NPU 2, ..., and an NPU 6 in FIG. 6) is used. In each round of training of the first neural network, the plurality of NPUs may use a same computational graph. Specifically, each NPU generates a function value of a loss function of the first neural network based on a batch (batch) of training samples, and calculates, based on the function value of the loss function, a gradient value corresponding to a weight parameter of the first neural network. The weight parameter of the first neural network may be synchronized between the plurality of NPUs in an AllReduce (AllReduce) manner. In other words, each NPU sends the generated gradient value. After an aggregation operation is performed on gradient values of weight parameters of the first neural network generated by the plurality of NPUs, each NPU receives an aggregated gradient value, and updates the weight parameter of the first neural network based on the aggregated gradient value. It should be understood that, the example in FIG. 6 is merely for ease of understanding of this solution, and is not intended to limit this solution.

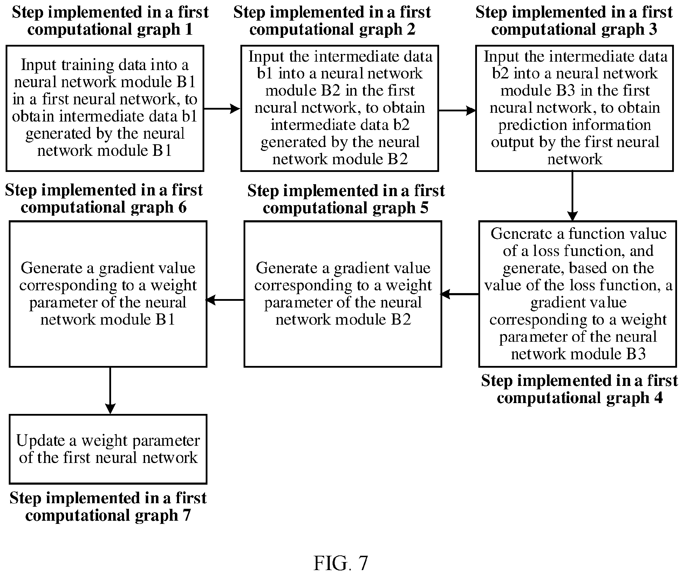

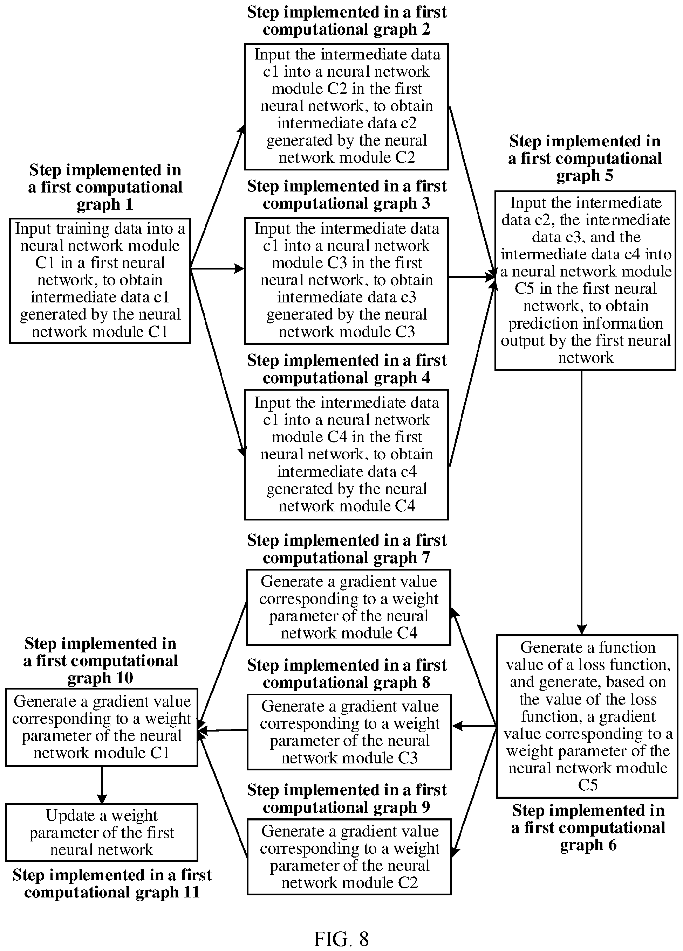

Refer to FIG. 7 and FIG. 8. In FIG. 7 and FIG. 8, because a first neural network is excessively large, computation of a forward propagation operation on the entire first neural network cannot be completed on a resource such as an internal memory resource or a computing power of a single processor. In this case, an N^{th} round of training of the first neural network may be split into a plurality of first computational graphs. Refer to FIG. 7 first. In FIG. 7, the first neural network is divided into a neural network module B1, a neural network module B2, and a neural network module B3 that are serial, and each neural network module includes a plurality of neural network layers. The forward propagation operation in the N^{th} round of training of the first neural network is implemented by using a first computational graph 1 to a first computational graph 3, to obtain prediction information output by the first neural network. Then, a backpropagation operation in the N^{th} round of training of the first neural network is implemented by using a first computational graph 4 to a first computational graph 6, to generate gradient values respectively corresponding to weight parameters of the neural network module B1, the neural network module B2, and the neural network module B3; and the weight parameters of the first neural network are updated by using a first computational graph 8.

Refer to FIG. 8. In FIG. 8, the first neural network is split into a neural network module C1 to a neural network module C5, and the neural network module C2 to the neural network module C4 are three neural network modules that are parallel. The forward propagation operation in the N^{th} round of training of the first neural network is implemented by using a first computational graph 1 to a first computational graph 5, to obtain prediction information output by the first neural network. Then, a backpropagation operation in the N^{th} round of training of the first neural network is implemented by using a first computational graph 6 to a first computational graph 10, to generate gradient values respectively corresponding to weight parameters of the neural network module C1 to the neural network module C5; and the weight parameters of the first neural network are updated by using a first computational graph 8. It should be understood that the examples in FIG. 7 and FIG. 8 are merely for ease of understanding of a concept of the "first computational graph", and are not intended to limit this solution.

Optionally, the first communication device may determine, in a plurality of manners, the "one or more computational graphs corresponding to the N^{th} round of training of the first neural network". It should be noted that a process of determining the "one or more computational graphs corresponding to the N^{th} round of training of the first neural network" may be performed by the first communication device, or may be performed by another communication device other than the first communication device. The first communication device receives the first computational graph sent by the another communication device. This is not limited in this application. Specifically, in an implementation, a preset policy may be configured on the first communication device. After the second computational graph is obtained, a partitioning operation may be performed on the second computational graph based on the preset policy, to obtain the one or more computational graphs corresponding to the N^{th} round of training of the first neural network.

The preset policy may include any one or more of the following policies: a policy of preferentially using compilation and execution in a compute-intensive step, a policy of increasing a speed of training a neural network, a policy of reducing overheads of computer resources, or another policy, and the like. This is not exhaustively enumerated herein. Optionally, before performing step 301, the first communication device may further receive a preset policy configured by a user. Further, optionally, the preset policy configured on the first communication device can be updated. It should be noted that the user herein may be a user of the first communication device, for example, a person skilled in training the first neural network.

For example, because most steps shown in the first computational graph need to be performed through an NPU, a GPU, or an artificial intelligence accelerator (artificial intelligence accelerator) of another type. The CPU may need to send a value of an input parameter of the first computational graph to the artificial intelligence accelerator. In the foregoing steps, that the artificial intelligence accelerator performs a step corresponding to the first computational graph can accelerate the speed of training the neural network, but the process of sending the value of the input parameter of the first computational graph to the artificial intelligence accelerator reduces the speed of training the neural network, and increases the overheads of the computer resources. In this case, the user configures the preset policy on the first communication device, so that the user can guide a process of determining the first computational graph. This helps improve reasonableness of the determined first computational graph.

In another implementation, after obtaining the second computational graph corresponding to the N^{th} round of training of the first neural network, the first communication device may present the second computational graph to the user. The first communication device receives first information input by the user, and the first information indicates to partition the second computational graph into one or more computational graphs. For example, the first information may include the one or more computational graphs corresponding to the N^{th} round of training of the first neural network. For another example, the first information may include a location of at least one partition node in the second computational graph. In this case, the first communication device may partition the second computational graph into a plurality of computational graphs based on the at least one partition node in the first information. It should be noted that specific information carried in the first information may be flexibly set with reference to an actual application scenario. This is not limited herein. In this embodiment of this application, the second computational graph is presented to the user, and the user directly determines the first computational graph based on the second computational graph. This helps further improve the reasonableness of the determined first computational graph.

In another implementation, after obtaining the second computational graph, the first communication device may alternatively determine one or more first computational graphs from the second computational graph in a heuristic manner.

302: Determine whether the first computational graph can be reused. If a determining result is that the first computational graph cannot be reused, step 303 is performed; or if a determining result is that the first computational graph can be reused, step 304 is performed.

In some embodiments of this application, after obtaining the first computational graph, the first communication device may determine whether the first computational graph can be reused. If the determining result is that the first computational graph cannot be reused, step 303 may be performed; or if the determining result is that the first computational graph can be reused, step 304 is performed. It should be noted that step 302 is an optional step. In some scenarios, a same computational graph is used for all rounds of training of the first neural network. In an implementation, the first communication device may consider by default that a first computational graph obtained each time can be reused. In this case, step 304 is directly performed without performing step 302. In this embodiment of this application, if the first computational graph is not reused, a first compiled code corresponding to the first computational graph is not reused, and storing the first compiled code in the system further causes a waste of storage resources of the system. In this case, if the first computational graph is limited to a reusable computational graph, only a compiled code corresponding to the reusable computational graph is stored in the system, which helps improve utilization of the storage resources of the system.

The first communication device may determine, in a plurality of manners, whether the first computational graph can be reused. Specifically, in an implementation, the first communication device may determine, based on a value of N, whether the first computational graph can be reused. For example, in an application scenario, a computational graph used for a 1^{st} round of training of the first neural network is different from a computational graph used for a 2^{nd} round of training, and the computational graph used for the 2^{nd} round of training is the same as a computational graph used for each subsequent round of training. In this case, step 303 may include: When the value of N is equal to 1, the first communication device may determine that the first computational graph cannot be reused; or when the value of N is greater than 1, in an implementation, the first communication device may directly determine that the first computational graph can be reused; or in another implementation, the first communication device may continue to determine, based on a computation amount of the first computational graph and a quantity of parameters required by the first computational graph, whether a gain can be brought by using the compilation and execution manner. If a determining result is that the gain can be brought by using the compilation and execution manner, it may be determined that the first computational graph can be reused; or if a determining result is that the gain cannot be brought by using the compilation and execution manner, it may be determined that the first computational graph cannot be reused. A factor for determining "whether the gain can be brought" may include: whether the speed of training the neural network can be accelerated, whether consumption of the computer resources can be reduced, or another factor. A specific factor to be used may be flexibly set with reference to an actual application scenario. This is not limited herein.

For another example, in another application scenario, a plurality of rounds of training of the first neural network may correspond to at least two different second computational graphs. With reference to FIG. 4 and FIG. 5, for example, in a process of training the first neural network based on the second computational graph shown in FIG. 4, to increase the speed of training the first neural network, a high-precision training manner may be changed to a mixed-precision training manner. However, after the training manner is changed to the mixed-precision training manner, a problem of overflow of the generated gradient value of the weight parameter of the first neural network may be caused. In this case, the step of "determining whether the gradient value of the weight parameter of the first neural network overflows" needs to be added. In other words, a second computational graph corresponding to each round of training of the first neural network may be converted into the first computational graph shown in FIG. 5. It should be noted that the second computational graph may also change due to another factor. The example herein is merely used for ease of understanding of this solution, and is not intended to limit this solution.

Specifically, the first communication device may store second information, where the second information indicates a preset value set corresponding to N. When the value of N is included in the preset value set, it indicates that the first computational graph corresponding to the N^{th} round of training of the first neural network can be reused. In this case, step 302 may include: determining whether the value of N is included in the preset value set, where if the value of N is not included in the preset value set, it may be determined that the first computational graph corresponding to the at least one first step in the N^{th} round of training of the first neural network cannot be reused. If the value of N is included in the preset value set, in an implementation, the first communication device may directly determine that the first computational graph can be reused; or in another implementation, the first communication device may continue to determine, based on a computation amount of the first computational graph and a quantity of parameters required by the first computational graph, whether a gain can be brought by using the compilation and execution manner. If a determining result is that the gain can be brought by using the compilation and execution manner, it may be determined that the first computational graph can be reused; or if a determining result is that the gain cannot be brought by using the compilation and execution manner, it may be determined that the first computational graph cannot be reused.

In another implementation, the first communication device may further determine, based on a value of a non-training parameter of the first neural network, whether the first computational graph can be reused. For example, when a learning rate in the non-training parameter of the first neural network changes, a gradient value for updating the weight parameter of the first neural network each time changes, and consequently, a computational graph used for performing the operation of training the first neural network may change. In this case, the first communication device may determine whether a learning rate used for performing the N^{th} round of training of the first neural network is the same as a learning rate used for performing an (N-1)^{th} round of training of the first neural network. If a determining result is that the learning rate used for performing the N^{th} round of training of the first neural network is not the same as the learning rate used for performing the (N-1)^{th} round of training of the first neural network, the first communication device may determine that the first computational graph corresponding to the at least one first step in the N^{th} round of training of the first neural network cannot be reused. If a determining result is that the learning rate used for performing the N^{th} round of training of the first neural network is the same as the learning rate used for performing the (N-1)^{th} round of training of the first neural network, the first communication device may determine that the first computational graph can be reused, and the like. The example herein is merely for ease of understanding of this solution, and is not intended to limit this solution. In another implementation, the first communication device may further determine, based on the value of N and a value of a non-training parameter of the first neural network, whether the first computational graph can be reused, and the like. It should be noted that the first communication device may further perform, based on another policy, an operation of determining "whether the first computational graph can be reused". Specifically, the operation may be flexibly determined with reference to an actual application scenario. This is not limited herein.

303: Perform the at least one first step in the N^{th} round of training of the first neural network in an interpretation and execution manner.

In some embodiments of this application, when determining that the first computational graph cannot be reused, the first communication device may perform, in the interpretation and execution manner, the at least one first step in the N^{th} round of training of the first neural network corresponding to the first computational graph.

The "compilation and execution" manner means that a compiled code (that is, compiled into a machine code) corresponding to the entire first computational graph is generated at a time through a compiler based on a first intermediate representation (IR) corresponding to the first computational graph, and the compiled code corresponding to the first computational graph is stored. During execution, the compiled code corresponding to the entire first computational graph may be directly executed. By using the "interpretation and execution" manner, during execution, the first intermediate representation (IR) corresponding to the first computational graph is interpreted into a machine code for execution in rows, and then a next row is interpreted for execution. In other words, during execution, the first intermediate representation is interpreted while execution is performed.

It should be noted that step 303 is an optional step. When determining that the first computational graph cannot be reused, the first communication device may alternatively perform, in the compilation and execution manner, the at least one first step in the N^{th} round of training of the first neural network corresponding to the first computational graph.

304: Determine whether a first mapping relationship is established. If a determining result is that the first mapping relationship is not established, step 305 is performed; or if a determining result is that the first mapping relationship is established, step 309 is performed.

In some embodiments of this application, the first communication device may determine whether the first mapping relationship is established, that is, determine whether the established first mapping relationship exists in a system in which the first communication device is located. If a determining result is that the established first mapping relationship is absent in the system in which the first communication device is located, step 305 is performed. If a determining result is that the established first mapping relationship exists in the system in which the first communication device is located, step 309 is performed. The first mapping relationship indicates an obtaining location of the value of the input parameter of the first computational graph. The system in which the first communication device is located includes a storage device that can be accessed by the first communication device. The storage device that can be accessed by the first communication device includes an internal memory that can be accessed by the first communication device, and may further include an external memory that can be accessed by the first communication device.

Optionally, the input parameter of the first computational graph may include a weight parameter of the first computational graph and a non-training parameter of the first computational graph. In this case, the first mapping relationship may indicate an obtaining location of a value of the weight parameter of the first computational graph and an obtaining location of a value of the non-training parameter of the first computational graph.

Optionally, the first mapping relationship may include a one-to-one mapping relationship between a plurality of non-training parameters of the first computational graph and a plurality of non-training parameters of a third computational graph. The mapping relationship indicates the obtaining location of the value of the non-training parameter of the first computational graph. For any non-training parameter (where for ease of description, the non-training parameter may be referred to as a "target parameter" hereinafter) of the first computational graph, for example, the first mapping relationship may be represented as a mapping relationship between locations, in the third computational graph, of the target parameter and a source of a value of the target parameter. Optionally, the first mapping relationship may further include a one-to-one mapping relationship between a plurality of weight parameters of the first computational graph and a plurality of weight parameters of the third computational graph. The mapping relationship indicates the obtaining location of the value of the weight parameter of the first computational graph.

The third computational graph corresponds to at least one first step in the (N-1)^{th} round of training of the first neural network. The third computational graph is similar to the first computational graph. A difference lies in that the third computational graph is used in the (N-1)^{th} round of training of the first neural network, and the first computational graph is used in the N^{th} round of training of the first neural network. After the (N-1)^{th} round of training of the first neural network is performed, a value of each training parameter of the first neural network and an updated value of each weight parameter of the first neural network may be determined.

The "non-training parameter of the first computational graph" is for controlling the process of training the first neural network. For example, the "non-training parameter of the first computational graph" may include a parameter of a normalization (batch norm) layer used in the process of training the first neural network. The normalization layer is used for preventing overfitting of the trained first neural network. For another example, the "non-training parameter of the first computational graph" may include a learning rate in a loss function. The learning rate is for controlling an update step and the like of the weight parameter of the first neural network. The value of the "non-training parameter of the first computational graph" is updated in a forward propagation process of each round of training, and an updated value of the non-training parameter of the first computational graph is also used in a next round of training. It should be understood that the example of the "non-training parameter of the first computational graph" herein is merely for ease of understanding of this solution, and is not intended to limit this solution. The "weight parameter of the first computational graph" may also be referred to as a training parameter of the first computational graph. A gradient value obtained in a backpropagation manner in the process of training the first neural network is for updating the value of the weight parameter of the first computational graph. An updated value of the "weight parameter of the first computational graph" is used in the next round of training.

It should be noted that, the first mapping relationship may not include the one-to-one mapping relationship between the plurality of weight parameters of the first computational graph and the plurality of weight parameters of the third computational graph, and may alternatively be a mapping relationship between the plurality of weight parameters of the first computational graph and parameters of another computational graph. With reference to the foregoing descriptions of FIG. 5, for example, FIG. 5 shows three computational graphs. A value of a weight parameter of the 1^{st} computational graph is from the 3^{rd} computational graph. In this case, the first mapping relationship may include a one-to-one mapping relationship between the weight parameter of the 1^{st} computational graph in FIG. 5 and a plurality of weight parameters of the 3^{rd} computational graph, to indicate an obtaining location of a value of the weight parameter of the 1^{st} computational graph, and the like. The example herein is merely for ease of understanding, and is not intended to limit this solution.

305: Perform representation conversion on the first computational graph, to obtain the first intermediate representation corresponding to the first computational graph.

In this embodiment of this application, step 304 is an optional step. If step 304 is performed, when determining that the first mapping relationship has not been established, the first communication device may perform representation conversion (tracing) on the first computational graph to obtain the first intermediate representation corresponding to the first computational graph. If step 304 is not performed, when determining that the first computational graph can be reused, the first communication device may directly perform representation conversion on the first computational graph, to obtain the first intermediate representation corresponding to the first computational graph. For example, the first computational graph obtained in step 301 may be understood as a first computational graph in a form of a higher layer language, and the "first intermediate representation corresponding to the first computational graph" may also be understood as a first computational graph in a form of a logic description.

306: Determine, based on the first intermediate representation, whether the first compiled code corresponding to the first computational graph is stored in the system. If a determining result is that the first compiled code corresponding to the first computational graph is not stored in the system, step 307 is performed; or if a determining result is that the first compiled code corresponding to the first computational graph is stored in the system, step 308 is performed.

In this embodiment of this application, after obtaining the first intermediate representation corresponding to the first computational graph, the first communication device may determine, based on the first intermediate representation, whether the first compiled code corresponding to the first computational graph has been stored in the system. Optionally, the first communication device may determine, based on the first intermediate representation, whether the first compiled code has been stored in the internal memory of the system. In this implementation, whether the first compiled code is stored in the system is determined based on the IR corresponding to the first computational graph, so that whether the first compiled code exists in the system can be accurately determined, thereby facilitating successful obtaining of the first compiled code from the system, and improving smoothness of a process of executing the first computational graph.

Specifically, step 306 may include: The first communication device generates an index value based on the first intermediate representation, and determines, based on the index value, whether the first compiled code corresponding to the first computational graph exists at a preset location in the internal memory of the first communication device. If a determining result is that the first compiled code corresponding to the first computational graph does not exist at the preset location in the internal memory of the first communication device, that is, it is determined that the first compiled code corresponding to the first computational graph does not exist in the system, step 307 is performed; or if a determining result is that the first compiled code corresponding to the first computational graph exists at the preset location in the internal memory of the first communication device, that is, it is determined that the first compiled code corresponding to the first computational graph has been stored in the system, step 308 is performed.

307: Generate, through the compiler based on the first intermediate representation, the first compiled code corresponding to the first computational graph, and store the first compiled code in the system.

In this embodiment of this application, when determining, based on the first intermediate representation, that the first compiled code corresponding to the first computational graph does not exist in the system, the first communication device may generate, through the compiler based on the first intermediate representation, the first compiled code corresponding to the first computational graph, and store the first compiled code in the system, for example, write the first compiled code corresponding to the first computational graph into the preset location in the internal memory of the first communication device. In this implementation, when the first compiled code does not exist in the system, after the first compiled code is generated, the first compiled code is stored in the system, so that after the first computational graph is obtained next time, the first compiled code can be directly obtained from the system. This improves smoothness of an implementation process of this solution.

Optionally, the first communication device may further trigger to start to establish the first mapping relationship. Further, optionally, the first communication device may trigger establishment of a one-to-one mapping relationship between the plurality of weight parameters of the first computational graph and a plurality of weight parameters of another computational graph. Specifically, when the first computational graph can be reused, and the first communication device determines that the first compiled code corresponding to the first computational graph does not exist at the preset location in the internal memory, it indicates that a current round is a 1^{st} round of training after it is determined that the first computational graph can be reused. The first communication device may generate, through the compiler, the first compiled code corresponding to the first computational graph, and store the first compiled code corresponding to the first computational graph at the preset location in the internal memory; and establish the mapping relationship between the plurality of weight parameters of the first computational graph and the plurality of weight parameters of the another computational graph. The another computational graph may be the third computational graph (that is, the first computational graph used in the (N-1)^{th} round of training of the first neural network), or may be another computational graph other than the third computational graph. For details, refer to the descriptions in step 304.

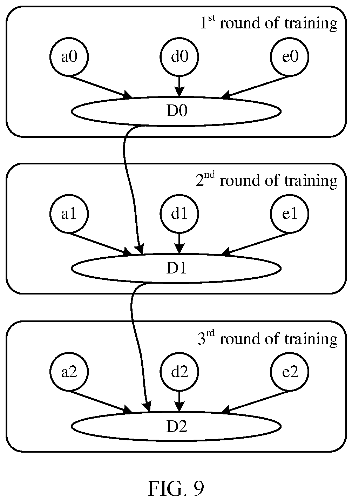

For more intuitive understanding of this solution, refer to FIG. 9. FIG. 9 is a diagram of an input parameter of a first computational graph according to an embodiment of this application. The input parameter of the first computational graph includes a weight parameter of the first computational graph and a non-training parameter of the first computational graph. FIG. 9 shows an input relationship between the weight parameter of the first computational graph and the non-training parameter of the first computational graph in a 1^{st} round of training, a 2^{nd} round of training, and a 3^{rd} round of training that are performed based on the first computational graph. In FIG. 9, for example, first computational graphs corresponding to the 2^{nd} round of training and a subsequent round of training can be reused. D0 represents a first neural network in the 1^{st} round of training, and a0, d0, and e0 represent values of weight parameters of the first neural network (namely, D0) in the 1^{st} round of training. D1 represents a first neural network in the 2^{nd} round of training, and a1, d1, and e1 represent values of weight parameters of the first neural network (namely, D1) in the 2^{nd} round of training. An arrow pointing from D0 to D1 represents that a value of a non-training parameter of D0 obtained through forward propagation in the 1^{st} round of training is determined as a value of a non-training parameter of D1 before the 2^{nd} round of training starts. D2 represents a first neural network in the 3^{rd} round of training, and a2, d2, and e2 represent values of weight parameters of the first neural network D2 in the 3^{rd} round of training. An arrow pointing from D1 to D2 represents that a value of a non-training parameter of D1 obtained through forward propagation in the 2^{nd} round of training is determined as a value of a non-training parameter of D2 before the 3^{rd} round of training starts.

As shown in FIG. 9, a manner of obtaining the weight parameter in the 1^{st} round of training is the same as a manner of obtaining the weight parameter in the subsequent round of training; and a manner of obtaining the non-training parameter of the first neural network in the 1^{st} round of training is different from a manner of obtaining the non-training parameter of the first neural network in the 2^{nd} round of training, and the manner of obtaining the non-training parameter of the first neural network in the 2^{nd} round of training is the same as a manner of obtaining a non-training parameter of a first neural network in the subsequent round of training. In this case, the first communication device may trigger to start to establish the first mapping relationship in the 1^{st} round of training after it is determined that the first computational graph can be reused (that is, the 2^{nd} round of training in FIG. 9). However, the first mapping relationship can be established only in a 2^{nd} round of training and a subsequent round of training after it is determined that the first computational graph can be reused. It should be understood that the example in FIG. 9 is merely for ease of understanding this solution, and is not intended to limit this solution.

308: Establish the first mapping relationship.

In this embodiment of this application, if the first computational graph can be reused, the first communication device determines that the first compiled code corresponding to the first computational graph exists at the preset location in the local internal memory, and the established first mapping relationship is absent in the system, the first mapping relationship may be established, and the first mapping relationship is stored in the system.

Specifically, in an implementation, the first communication device may directly establish the one-to-one mapping relationship between the plurality of weight parameters of the first computational graph and the plurality of weight parameters of the another computational graph. The another computational graph may be the third computational graph (that is, the first computational graph used in the (N-1)^{th} round of training of the first neural network), or may be another computational graph other than the third computational graph. For details, refer to the descriptions in step 304. In addition, the first communication device may establish the one-to-one mapping relationship between the plurality of non-training parameters of the first computational graph and the plurality of non-training parameters of the third computational graph. In this way, the first mapping relationship is established.

In another implementation, if the one-to-one mapping relationship between the plurality of weight parameters of the first computational graph and the plurality of weight parameters of the another computational graph has been established in the 1^{st} round of training after it is determined that the first computational graph can be reused, in step 308, the first communication device may establish the one-to-one mapping relationship between the plurality of non-training parameters of the first computational graph and the plurality of non-training parameters of the third computational graph. In this way, the first mapping relationship is established.

Optionally, if the plurality of rounds of training of the first neural network may correspond to at least two different second computational graphs, in other words, the first computational graph in the plurality of rounds of training of the first neural network may change, the first mapping relationship needs to be re-established. Alternatively, if the first computational graph executed by the first communication device does not change, but the obtaining location of the input parameter of the first computational graph changes, the first mapping relationship also needs to be re-established.

309: Obtain the first compiled code corresponding to the first computational graph from the system, where the first compiled code is generated during execution of an M^{th} round of training of the neural network, M is a positive integer, and M is less than N.

In this embodiment of this application, step 304 is an optional step. If step 304 is performed, and it is determined, by using step 304, that the first mapping relationship is established, step 309 is performed as follows: The first communication device may directly obtain, from the preset location in the internal memory, the first compiled code corresponding to the first computational graph, where the first compiled code is generated during execution of the M^{th} round of training of the neural network, M is an integer greater than 1, and M is less than N.

As can be learned from the descriptions in steps 307 and 308, the first communication device generates the first compiled code in a 1^{st} round of training performed after determining that the first computational graph can be reused, and the first mapping relationship can be established in a 2^{nd} round and subsequent round of training that are performed after determining that the first computational graph can be reused. Therefore, if the first mapping relationship has been stored in the system, there is a high probability that a step of "generating, through a compiler, the first compiled code corresponding to the first computational graph" has been performed, and in this case, the first compiled code corresponding to the first computational graph can be directly obtained from the system. In other words, whether the first compiled code corresponding to the first computational graph exists in the system is determined based on whether the first mapping relationship is established. In this case, there is no need to generate the intermediate representation corresponding to the first computational graph, and query, based on the intermediate representation corresponding to the first computational graph, whether the first compiled code corresponding to the first computational graph exists. According to the foregoing solution, difficulty of the step of "determining whether the first compiled code corresponding to the first computational graph exists in the system" is reduced, the overheads of the computer resources caused by the foregoing determining step are reduced, and a speed of the foregoing determining step is increased. This helps accelerate the speed of performing the operation of training the first neural network.

If step 304 is performed, and it is determined, by using step 304, that the first mapping relationship has not been established, step 306 may be performed to perform step 308, and then step 309 may be performed as follows: When it is determined that the first mapping relationship has not been successfully established, and the first compiled code has been stored in the system, an operation of establishing the first mapping relationship is performed by using step 308, and various first compiled codes are obtained from the system.

Alternatively, if step 304 is not performed, step 306 may be performed to perform step 308, and then step 309 is performed. In other words, when it is determined, based on the immediate computational representation corresponding to the first computational graph, that the first compiled code corresponding to the first computational graph exists at the preset location in the internal memory, an operation of establishing the first mapping relationship is performed by using step 308, and various first compiled codes are obtained from the system.

In this embodiment of this application, when the first computational graph can be reused, and the first mapping relationship has not been established, representation conversion is further performed on the first computational graph to obtain the intermediate representation corresponding to the first computational graph. When it is determined, based on the immediate computational representation corresponding to the first computational graph, that the first compiled code corresponding to the first computational graph exists in stored data, the first mapping relationship may be established, and the first compiled code is directly obtained from the stored data, instead of directly generating the intermediate representation corresponding to the first computational graph when the first mapping relationship has not been established, and generating, through the compiler, the first compiled code corresponding to the first computational graph. In this way, a step of "generating, based on the intermediate representation corresponding to the first computational graph, the first compiled code corresponding to the first computational graph" is reduced. This helps reduce overheads of computer resources and accelerate a speed of the step of "obtaining the first compiled code corresponding to the first computational graph", and helps increase the speed of performing the operation of training the first neural network.

310: Obtain input data of the first computational graph.

In this embodiment of this application, the first communication device needs to obtain the input data of the first computational graph. The input data of the first computational graph may include a value of an input parameter of the first computational graph. Specifically, the first communication device may obtain the first mapping relationship from the system, where the first mapping relationship indicates an obtaining location of the input parameter of the first computational graph; and determine, based on the first mapping relationship, a value of the input parameter of the first computational graph in the N^{th} round of training of the first neural network. In this implementation, the system may further store the first mapping relationship, where the first mapping relationship indicates the obtaining location of the input parameter of the first computational graph. In this way, during execution of the first compiled code, the value of the input parameter of the first computational graph may be directly determined based on the first mapping relationship. This helps increase a speed of obtaining the value of the input parameter of the first computational graph, and further helps accelerate the speed of performing the operation of training the first neural network.

Optionally, the input data of the first computational graph may further include a training sample input into the first neural network. For example, if a process of forward propagation of the training sample in the entire first neural network can be implemented in the one or more first steps corresponding to the first computational graph, the input data of the first computational graph may include the training sample. For another example, if a process of forward propagation of the training sample at first n neural network layers of the first neural network can be implemented in the one or more first steps corresponding to the first computational graph, the input data of the first computational graph may also include the training sample.

Alternatively, the input data of the first computational graph may further include data generated by a neural network layer of the first neural network. For example, refer to FIG. 7 and FIG. 8. Because the process of forward propagation in the entire first neural network consumes too many computer resources, operations of a plurality of neural network layers of the first neural network can be implemented in the one or more first steps corresponding to the first computational graph. In this case, the input data of the first computational graph may include data generated by a neural network layer of the first neural network.

Alternatively, the input data of the first computational graph may further include a gradient value corresponding to the weight parameter of the first neural network, and the like. A specific type of data included in the input data of the first computational graph may be determined based on an actual application scenario. The example herein is merely for ease of understanding of this solution, and is not intended to limit this solution.

A value of at least one piece of input data of the first computational graph exists in second output data obtained by performing a third step in the operation of training the neural network. If the third step in the operation of training the neural network is not performed in the compilation and execution manner, optionally, the first communication device may further obtain a second data structure used for performing the third step in the operation of training the first neural network, and obtain, based on a format of the second data structure, the value of the at least one piece of input data of the first computational graph. The "third step in the operation of training the neural network" may also be referred to as an upstream task of the "first step in the operation of training the neural network".

Further, optionally, after obtaining the first mapping relationship from the system, if the first communication device determines, based on the first mapping relationship, that a value of at least one input parameter of the first computational graph is stored in the second output data generated during execution of the third step in the operation of training the first neural network, that is, if it is determined, based on the first mapping relationship, that the obtaining location of the input parameter of the first computational graph includes the second output data, in step 310, the first communication device may obtain, from the second output data based on the format of the second data structure, the value of the at least one input parameter of the first computational graph.

For example, the at least one piece of input data of the first computational graph may be represented as a tensor. The first communication device may understand, based on a second data structure of the tensor, the second output data stored in the internal memory. For example, the second data structure of the tensor may be used to describe a definition of a data member in a tensor form used for performing the third step in the N^{th} round of training of the first neural network, a layout form of the second output data in the internal memory, an internal memory alignment manner used for storing the second output data in the internal memory, or the like. Types of information carried in the second data structure of the tensor are not exhaustively enumerated herein.

For example, the "definition of a data member in a tensor form used for performing the third step in the N^{th} round of training of the first neural network" may include a data type of each data member used for performing the third step in the N^{th} round of training of the first neural network, for another example, a 32-bit floating point number (float32) and a 16-bit integer (int16) are different data types; and may further include a size of a tensor corresponding to each data member, and may further define other information of each data member. This is not exhaustively enumerated herein. For example, the layout form of the second output data in the internal memory may include a storage structure used by the second output data in the tensor form in the internal memory. The foregoing storage structure may include a queue, a stack, a linked list, or another storage structure. The example herein is merely intended to facilitate understanding of a concept of the data structure of the tensor, and is not intended to limit this solution.

In this embodiment of this application, the second data structure used for an upstream task of the first step in the operation of training the neural network may be further obtained, and the at least one piece of input data of the first computational graph is obtained from output data of the upstream task based on the format of the second data structure. This avoids overheads of computer resources caused when same data is converted between different data structures.

Further, optionally, a read location of the at least one piece of input data of the first computational graph is consistent with a storage location of the second output data. Optionally, that "a read location of the at least one piece of input data of the first computational graph in the internal memory is consistent with a storage location of the second output data in the internal memory" may be implemented by using a shared pointer technology. It should be noted that, after reading the at least one piece of input data of the first computational graph, the first communication device does not modify the second output data when executing the first compiled code. In this embodiment of this application, the read location of the at least one piece of input data of the first computational graph is consistent with the storage location of the second output data, so that copy of same data between different storage locations is avoided, thereby further reducing the overheads of the computer resources.

It should be noted that an execution sequence of step 310 and any one of steps 302 to 309 is not limited in this embodiment of this application, and step 310 may be performed before or after any one of steps 302 to 309.

311: Execute the first compiled code corresponding to the first computational graph.

In this embodiment of this application, after executing, based on the value of the input parameter of the first computational graph, the first compiled code corresponding to the first computational graph, the first communication device can generate third output data. For example, the third output data may be tensor data. It should be noted that an execution sequence of steps 310 and 311 is not limited in this embodiment of this application. In a process of executing the first compiled code, the value of the at least one input parameter of the first computational graph may be further obtained by using step 310, and the first compiled code continues to be executed. In other words, steps 310 and 311 can be executed in a cross manner.

Optionally, if the second step in the N^{th} round of training of the first neural network is not performed in the compilation and execution manner, in an implementation, before step 310 is performed, the first communication device may further obtain a first data structure used for performing the second step in the operation of training the neural network. Step 311 may include: The first communication device generates first output data of the first data structure, where the first output data may be the same as the third output data, or the first output data may include a part of the third output data. The first output data includes at least one piece of input data of the second step in the operation of training the neural network, and the "second step of the operation of training the neural network" may also be referred to as a downstream task of the "first step of the operation of training the neural network".

The first communication device may generate, based on a first data structure of a tensor, the first output data that can be understood by the downstream task. The first data structure of the tensor may be used to describe a definition of a data member in a tensor form used for performing the second step in the N^{th} round of training of the first neural network, a layout form of the first output data in the internal memory, an internal memory alignment manner used for storing the first output data in the internal memory, or the like. This is not exhaustively enumerated herein. A meaning of the "first data structure" is similar to a meaning of the "second data structure". For understanding, refer to the foregoing descriptions. Details are not described herein again.

In this embodiment of this application, the first data structure used for the downstream task of the first step in the operation of training the neural network may be further obtained. When the first compiled code corresponding to the first computational graph is executed, output data of the first data structure is generated. In this case, the downstream task does not need to convert the data structure of the first output data when accessing the first output data. This avoids overheads of computer resources caused when same data is converted between different data structures.

Further, optionally, a storage location of the first output data is consistent with a read location of the at least one piece of input data of the second step. Optionally, that "a storage location of the first output data is consistent with a read location of the at least one piece of input data of the second step" may be implemented by using the shared pointer technology. It should be noted that, after the first communication device completes a write operation on the first output data, an ownership of the first output data is transferred to the downstream task.

In this embodiment of this application, the storage location of the first output data is consistent with the read location of the at least one piece of input data of the second step, so that copy of same data between different storage locations is avoided, thereby further reducing the overheads of the computer resources.

In another implementation, the first communication device generates first output data of a target data structure, and converts the first output data of the target data structure into output data of the first data structure. The first output data includes the at least one piece of input data of the second step in the operation of training the neural network, the first data structure is a data structure used for performing the second step in the operation of training the neural network, and the target data structure is a data structure used for performing the first step in the operation of training the neural network.

Optionally, after generating the third output data, the first communication device needs to perform an operation of sending the third output data. For example, the first communication device is an NPU, and the plurality of first steps corresponding to the first computational graph include generating a gradient value (that is, an example of the third output data) of the weight parameter of the first neural network in the N^{th} round of training of the first neural network. The NPU needs to send the generated gradient value to the CPU, that is, needs to perform the operation of sending the third output data.

Specifically, in an implementation, the plurality of first steps corresponding to the first computational graph not only include generating the gradient value of the weight parameter of the first neural network in the N^{th} round of training of the first neural network, but also include performing the operation of sending the third output data. In this case, step 311 may include: The first communication device executes the first compiled code corresponding to the first computational graph to generate the third output data, and send the third output data.

In another implementation, step 311 may include: The first communication device executes the first compiled code corresponding to the first computational graph, to generate the third output data, and perform the operation of sending the third output data by invoking a preset interface, where the preset interface may be an interface of a gradient communication library provided by a third party.

In this application scenario, the "operation of sending the third output data" is used as the downstream task of the "first step in the operation of training the neural network", in other words, the "operation of sending the third output data" is used as the "second step in the operation of training the neural network". In an implementation, the first communication device may execute the first compiled code corresponding to the first computational graph, to generate the third output data of the first data structure, and send the first output data of the first data structure by invoking the preset interface. Optionally, consistency between a storage location of the first output data of the first data structure and a location at which the preset interface reads the first output data is implemented by using the shared pointer technology.

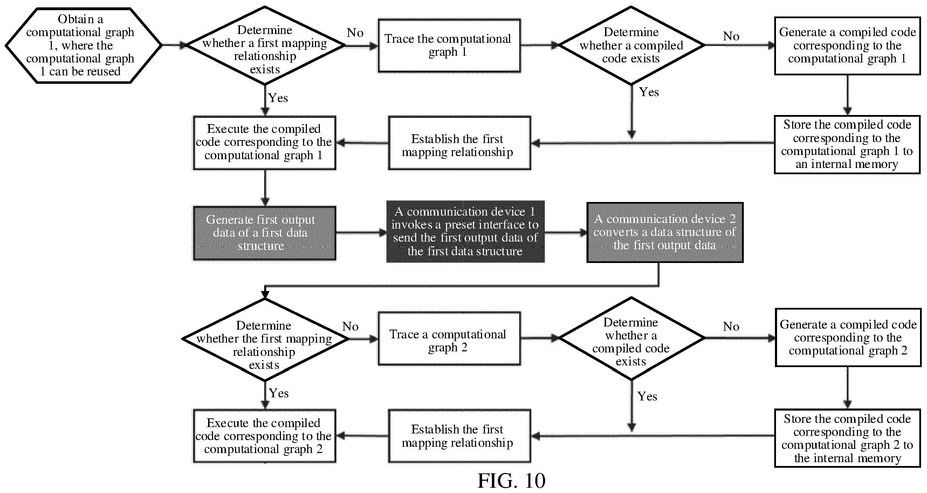

For more intuitive understanding of this solution, refer to FIG. 10. FIG. 10 is a schematic flowchart of sending first output data according to an embodiment of this application. In FIG. 10, for example, step 304 is performed. After obtaining a computational graph 1 that can be reused, a communication device 1 determines whether a first mapping relationship corresponding to a parameter of the computational graph 1 exists. If a determining result is that the first mapping relationship corresponding to the parameter of the computational graph 1 exists, the communication device 1 obtains, from stored data, a first compiled code corresponding to the computational graph 1, and executes the first compiled code corresponding to the computational graph 1. If a determining result is that the first mapping relationship corresponding to the parameter of the computational graph 1 does not exist, the computational graph 1 is traced to obtain an intermediate representation corresponding to the computational graph 1, and determines, based on the intermediate representation corresponding to the computational graph 1, whether a compiled code corresponding to the computational graph 1 exists at the preset location in the internal memory. If a determining result is that the compiled code corresponding to the computational graph 1 does not exist at the preset location in the internal memory, the communication device 1 may generate the compiled code corresponding to the computational graph 1, store the compiled code corresponding to the computational graph 1 at the preset location in the internal memory, establish the first mapping relationship, and execute the compiled code corresponding to the computational graph 1; or if a determining result is that the compiled code corresponding to the computational graph 1 exists at the preset location in the internal memory, the communication device 1 may establish the first mapping relationship, and execute the compiled code corresponding to the computational graph 1.

In FIG. 10, an operation of sending the first output data is performed by invoking a preset interface provided by a third party. In this case, the communication device 1 may obtain a first data structure used when the third party performs the operation of sending the first output data, generate the first output data of the first data structure after executing the compiled code corresponding to the computational graph 1, and invoke the interface to send the first output data of the first data structure.

After receiving the first output data of the first data structure, a communication device 2 may convert the data structure of the first output data, and start to perform at least one step corresponding to a computational graph 2. Specifically, after obtaining the computational graph 2 that can be reused, the communication device 2 determines whether a first mapping relationship corresponding to a parameter of the computational graph 2 exists. If a determining result is that the first mapping relationship corresponding to the parameter of the computational graph 2 exists, the communication device 2 obtains, from stored data, a first compiled code corresponding to the computational graph 2, and executes the first compiled code corresponding to the computational graph 2. If a determining result is that the first mapping relationship corresponding to the parameter of the computational graph 2 does not exist, the computational graph 2 is traced to obtain an intermediate representation corresponding to the computational graph 2, and determines, based on the intermediate representation corresponding to the computational graph 2, whether a compiled code corresponding to the computational graph 2 exists at the preset location in the internal memory. If a determining result is that the compiled code corresponding to the computational graph 2 does not exist at the preset location in the internal memory, the communication device 2 may generate the compiled code corresponding to the computational graph 2, store the compiled code corresponding to the computational graph 2 at the preset location in the internal memory, establish the first mapping relationship, and execute the compiled code corresponding to the computational graph 2; or if a determining result is that the compiled code corresponding to the computational graph 2 exists at the preset location in the internal memory, the communication device 2 may establish the first mapping relationship, and execute the compiled code corresponding to the computational graph 2. It should be noted that FIG. 10 shows a process of separately executing the first computational graph on the communication device 1 and the communication device 2, and a process of data exchange between the communication device 1 and the communication device 2. The example in FIG. 10 is merely for ease of understanding of this solution, and is not intended to limit this solution.

In this embodiment of this application, a specific example of the downstream task of the first step in the operation of training the neural network is provided. Communication of the first output data is implemented by invoking the preset interface, which is convenient and convenient. In addition, the first output data of the first data structure is generated. In this way, conversion of the first output data between different data structures is avoided, and efficiency of a process of sending the first output data is improved.

In another implementation, the first communication device may execute the first compiled code corresponding to the first computational graph, to generate third output data of a target data structure, generate the first output data of the first data structure based on the third output data of the target data structure, and send the first output data of the first data structure by invoking the preset interface.

It should be noted that, in the embodiment corresponding to FIG. 3, only an example in which steps 301 to 311 are all performed by the first communication device is used. In an actual application scenario, steps 301 to 311 may also be jointly implemented by at least two communication devices. For example, steps 301 and 302 and steps 303 to 311 may be performed by different communication devices. With reference to the architectural diagram shown in FIG. 5, for example, steps 301 and 302 may be performed by the CPU. If the CPU determines that the first computational graph can be reused, the first compiled code corresponding to the first computational graph may be generated through the compiler, and the first information, the first computational graph, and the first compiled code corresponding to the first computational graph are sent to each NPU, where the first information indicates the NPU to implement, in the compilation and execution manner, the one or more first steps corresponding to the first computational graph. If the CPU determines that the first computational graph cannot be reused, the CPU may send third information and the first computational graph to each NPU, where the third information indicates the NPU to implement, in the interpretation and execution manner, the one or more first steps corresponding to the first computational graph. In another application scenario, there may be another allocation form for an entity that performs steps 301 to 311. Details are not described herein one by one. An entity that performs each of steps 301 to 311 may be flexibly determined with reference to an actual application scenario. This is not limited in this embodiment of this application.

### 2. The cloud device and the terminal device jointly perform an operation of training the first neural network

In this embodiment of this application, in a scenario in which the cloud device and the terminal device jointly perform the operation of training the first neural network, in an implementation, the terminal device performs a step of "generating, through a compiler, a first compiled code corresponding to a first computational graph". For a specific implementation of performing the method for training a neural network by the terminal device, refer to the descriptions in the embodiment corresponding to FIG. 3. Details are not described herein again.

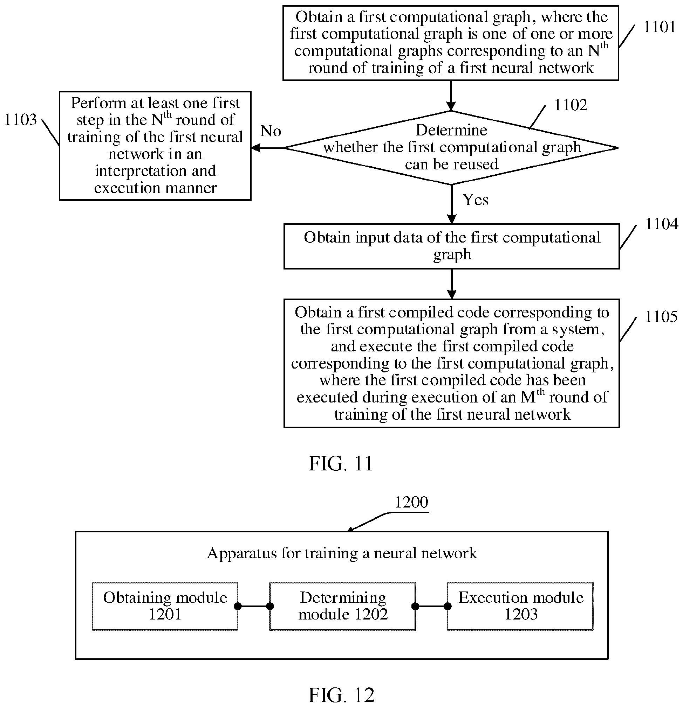

In another implementation, "the first compiled code corresponding to the first computational graph" is sent by the cloud device to the terminal device. Specifically, refer to FIG. 11. FIG. 11 is still another schematic flowchart of a method for training a neural network according to an embodiment of this application. The method for training a neural network provided in this embodiment of this application may include the following steps.

1101: Obtain a first computational graph, where the first computational graph is one of one or more computational graphs corresponding to an N^{th} round of training of the neural network.

In this embodiment of this application, the terminal device may obtain the first computational graph. The N^{th} round of training of the first neural network corresponds to one or more computational graphs, and the one or more computational graphs include the first computational graph. In other words, the first computational graph is one of the one or more computational graphs corresponding to the N^{th} round of training of the neural network. Specifically, step 1101 may include: The terminal device receives the first computational graph sent by the cloud device. For a manner in which the cloud device generates the first computational graph and a concept of the first computational graph, refer to the descriptions in step 301 in the embodiment corresponding to FIG. 3. Details are not described herein again. Alternatively, the terminal device generates the first computational graph. For a manner in which the terminal device generates the first computational graph, refer to the descriptions in step 301 in the embodiment corresponding to FIG. 3. Details are not described herein again.

1102: Determine whether the first computational graph can be reused. If a determining result is that the first computational graph cannot be reused, step 1103 is performed; or if a determining result is that the first computational graph can be reused, step 1104 is performed.

In this embodiment of this application, step 1102 is an optional step. If step 1102 is performed, in an implementation, for a specific implementation of performing step 1102 by the terminal device, refer to the descriptions of step 302 in the embodiment corresponding to FIG. 3. Details are not described herein again. In another implementation, the terminal device receives the first computational graph and fourth information that are sent by the cloud device, where the fourth information indicates whether the first computational graph can be reused, and the terminal device may determine, based on the received fourth information, whether the first computational graph can be reused.

1103: Perform the at least one first step in the N^{th} round of training of the first neural network in an interpretation and execution manner.

In some embodiments of this application, after determining that the first computational graph cannot be reused, the terminal device may perform the at least one first step in the N^{th} round of training of the first neural network in the interpretation and execution manner. For a specific implementation of performing step 1103, refer to the descriptions of step 303 in the embodiment corresponding to FIG. 3. Details are not described herein again.

It should be noted that step 1103 is an optional step. When receiving the first computational graph and the fourth information that are sent by the cloud device, the terminal device may further receive a compiled code that is sent by the cloud device and that corresponds to the first computational graph. After determining that the first computational graph cannot be reused, the terminal device may execute the compiled code that is sent by the cloud device and that corresponds to the first computational graph, and delete the compiled code corresponding to the first computational graph after the execution ends.

1104: Obtain input data of the first computational graph.

In this embodiment of this application, the terminal device may obtain the input data of the first computational graph. The input data may include a training sample and a value of a parameter of the first computational graph. The training sample included in the input data may be obtained by the terminal device from stored data.

For a specific manner of obtaining the "value of the parameter of the first computational graph", in an implementation, a value of an input parameter of the first computational graph may be sent by the cloud device to the terminal device. In another implementation, the value of the input parameter of the first computational graph may be generated by the terminal device when the terminal device performs an (N-1)^{th} round of training of the first neural network. Specifically, the terminal device may determine the value of the parameter of the first computational graph based on a first mapping relationship. The first mapping relationship may be generated by the cloud device and then sent to the terminal device, or may be generated by the terminal device. For a concept of the "first mapping relationship" and a specific manner for generating the "first mapping relationship", refer to the descriptions in the embodiment corresponding to FIG. 3. Details are not described herein again.

1105: Obtain a first compiled code corresponding to the first computational graph from a system, and execute the first compiled code corresponding to the first computational graph, where the first compiled code has been executed when an M^{th} round of training of the first neural network is executed.

In some embodiments of this application, the cloud device may send, to the terminal device in a 1^{st} round of training after it is determined that the first computational graph can be reused, the first compiled code corresponding to the first computational graph. Correspondingly, when determining that the first computational graph can be reused, the terminal device stores, in the system, the first compiled code corresponding to the first computational graph.

After obtaining the input data of the first computational graph, the terminal device may obtain the first compiled code corresponding to the first computational graph from the system, and execute the first compiled code corresponding to the first computational graph. For a specific implementation of step 1105, refer to the descriptions in step 311 in the embodiment corresponding to FIG. 3. Details are not described herein again. It should be noted that an execution sequence of step 1104 and step 1105 is not limited in this embodiment of this application. Steps 1104 and 1105 may be performed in a cross manner. In other words, the input data of the first computational graph may be obtained in a process of executing the first compiled code, and the first compiled code continues to be executed.

In this implementation, during execution of the N^{th} round of training of the first neural network, after the first computational graph is obtained, because the first compiled code corresponding to the first computational graph has been generated during execution of the M^{th} round of training of the first neural network, it may be determined that the first compiled code corresponding to the first computational graph has been stored in the system, and the first compiled code is directly executed. In other words, during the N^{th} round of training of the first neural network, there is no need to perform an operation of converting the first computational graph into an intermediate representation, and obtaining the first compiled code based on the intermediate representation. This reduces overheads of computer resources.

According to the embodiments corresponding to FIG. 1 to FIG. 11, to better implement the foregoing solutions in embodiments of this application, the following further provides related devices configured to implement the foregoing solutions. For details, refer to FIG. 12. FIG. 12 is a diagram of a structure of an apparatus for training a neural network according to an embodiment of this application. An apparatus 1200 for training a neural network includes an obtaining module 1201, a determining module 1202, and an execution module 1203. The obtaining module 1201 is configured to obtain a first computational graph, where an N^{th} round of training of the neural network corresponds to one or more computational graphs, and the one or more computational graphs include first computational graph, in other words, the first computational graph is one of one or more computational graphs corresponding to the N^{th} round of training of the neural network, and N is a positive integer. The determining module 1202 is configured to determine that a first compiled code corresponding to the first computational graph has been stored in a system, where the first compiled code is generated during execution of an M^{th} round of training of the neural network, M is a positive integer, and M is less than N. The execution module 1203 is configured to execute the first compiled code.

In a possible design, the execution module 1203 is specifically configured to: obtain a first mapping relationship from the system, where the first mapping relationship indicates an obtaining location of an input parameter of the first computational graph; determine a value of the input parameter of the first computational graph in the N^{th} round based on the first mapping relationship; and execute the first compiled code based on the value of the input parameter.

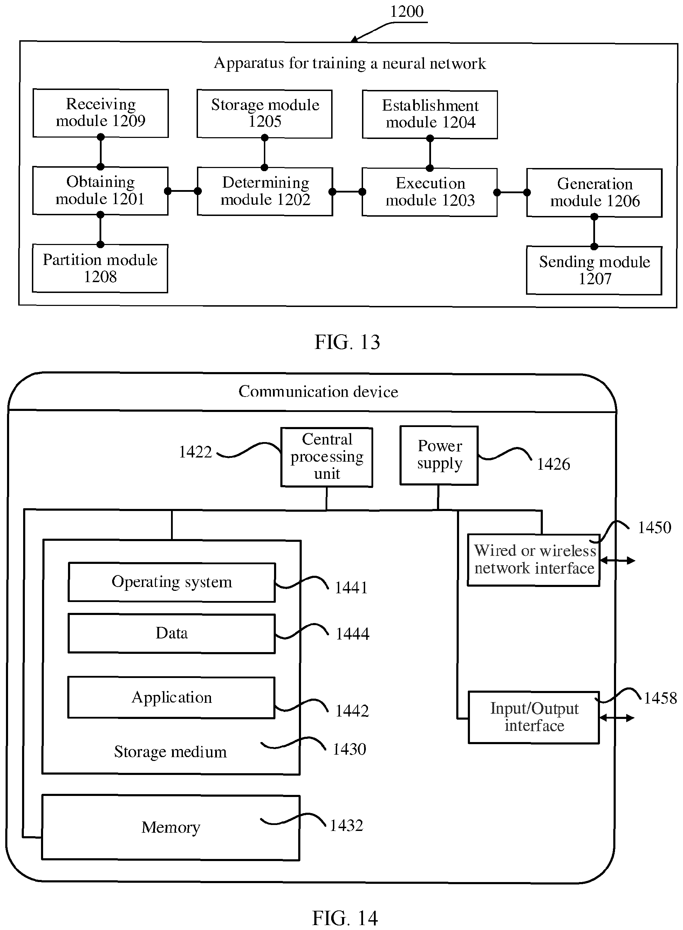

In a possible design, refer to FIG. 13. FIG. 13 is another diagram of a structure of an apparatus for training a neural network according to an embodiment of this application. The apparatus 1200 for training a neural network further includes: an establishment module 1204, configured to establish the first mapping relationship if the first mapping relationship is absent in the system.

In a possible design, the first computational graph is a reusable computational graph.

In a possible design, the determining module 1202 is specifically configured to: perform representation conversion on the first computational graph, to obtain an intermediate representation IR corresponding to the first computational graph; and determine, based on the IR, that the first compiled code has been stored in the system.

In a possible design, refer to FIG. 13. When performing the M^{th} round of training of the neural network, the obtaining module 1201 is further configured to: obtain the first computational graph, and generate the first compiled code based on the first computational graph. The apparatus 1200 for training a neural network further includes a storage module 1205, configured to store the first compiled code in the system.

In a possible design, the determining module 1202 is specifically configured to: if the first mapping relationship has been stored in the system, determine that the first compiled code has been stored in the system, where the first mapping relationship indicates the obtaining location of the input parameter of the first computational graph.

In a possible design, refer to FIG. 13. The first computational graph corresponds to a first step in the N^{th} round of training of the first neural network. The apparatus 1200 for training a neural network further includes: a generation module 1206, configured to: generate first output data, where the first output data is of a first data structure, the first output data includes at least one piece of input data of a second step in an operation of training the neural network, the first data structure is a data structure used for performing the second step in the operation of training the neural network, and the operation of training the neural network includes the N^{th} round of training of the neural network;
and/or
the execution module 1203 is specifically configured to: obtain at least one piece of input data of the first computational graph based on a format of a second data structure, where the at least one piece of input data of the first computational graph exists in second output data of a third step in the operation of training the neural network, and the second data structure is a data structure used for performing the third step in the operation of training the neural network.

In a possible design, a storage location of the first output data is consistent with a read location of the at least one piece of input data of the second step; and/or a read location of the at least one piece of input data of the first computational graph is consistent with a storage location of the second output data.

In a possible design, refer to FIG. 13. The apparatus 1200 for training a neural network further includes: a sending module 1207, configured to send the first output data by invoking a preset interface, where the second step in the operation of training the neural network includes sending the first output data, and the first data structure is a data structure used for performing an operation of sending the first output data.

In a possible design, refer to FIG. 13. The apparatus 1200 for training a neural network further includes: a partition module 1208, configured to perform, based on a preset policy input by a user, a partitioning operation on a second computational graph to obtain the one or more computational graphs corresponding to the N^{th} round of training of the neural network. Alternatively, the apparatus 1200 for training a neural network further includes: a receiving module 1209, configured to receive the one or more computational graphs that are input by a user and that correspond to the N^{th} round of training of the neural network.

It should be noted that content such as information exchange and an execution process between the modules/units in the apparatus 1200 for training a neural network is based on a same concept as the method embodiments corresponding to FIG. 3 to FIG. 11 in this application. For specific content, refer to the descriptions in the foregoing method embodiments in this application. Details are not described herein again.

The following describes a communication device provided in an embodiment of this application. The communication device is configured to perform the method for training a neural network provided in this application. In an application scenario, the communication device may be represented as a server. Specifically, refer to FIG. 14. FIG. 14 is a diagram of a structure of a communication device according to an embodiment of this application. Specifically, the communication device is implemented by one or more servers. A communication device 1400 may have a relatively large difference due to different configurations or performance, and may include one or more central processing units (central processing units, CPU) 1422 (for example, one or more processors), a memory 1432, and one or more storage media 1430 (for example, one or more mass storage devices) that store an application 1442 or data 1444. The memory 1432 and the storage medium 1430 may be transient storage or persistent storage. A program stored in the storage medium 1430 may include one or more modules (not shown), and each module may include a series of instruction operations performed on the communication device. Further, the central processing unit 1422 may be configured to communicate with the storage medium 1430, and perform, on the communication device 1400, the series of instruction operations in the storage medium 1430.

The communication device 1400 may further include one or more power supplies 1426, one or more wired or wireless network interfaces 1450, one or more input/output interfaces 1458, and/or one or more operating systems 1441, for example, Windows ServerTM, Mac OS XTM, UnixTM, LinuxTM, and FreeBSDTM.

In this embodiment of this application, the central processing unit 1422 is configured to perform the method for training a neural network performed by the communication device in the embodiments corresponding to FIG. 3 to FIG. 10. It should be noted that a specific manner in which the central processing unit 1422 performs the foregoing steps is based on a same concept as the method embodiments corresponding to FIG. 3 to FIG. 10 in this application. Technical effects brought by the specific manner are the same as those in the method embodiments corresponding to FIG. 3 to FIG. 10 in this application. For specific content, refer to the descriptions in the foregoing method embodiments in this application. Details are not described herein again.

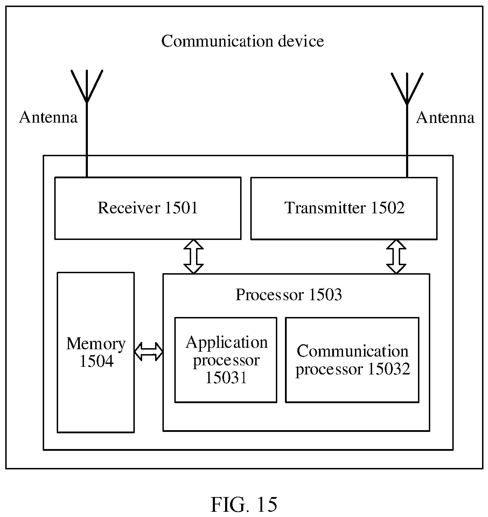

In another application scenario, the communication device may be represented as a terminal device. Refer to FIG. 15. FIG. 15 is a diagram of a structure of a communication device according to an embodiment of this application. The communication device may be specifically represented as a virtual reality VR device, a mobile phone, a tablet, a notebook computer, an intelligent wearable device, a monitoring data processing device, a radar data processing device, or the like. This is not limited herein. Specifically, the communication device includes a receiver 1501, a transmitter 1502, a processor 1503, and a memory 1504 (where there may be one or more processors 1503 in the communication device, and one processor is used as an example in FIG. 15). The processor 1503 may include an application processor 15031 and a communication processor 15032. In some embodiments of this application, the receiver 1501, the transmitter 1502, the processor 1503, and the memory 1504 may be connected through a bus or in another manner.

The memory 1504 may include a read-only memory and a random access memory, and provide instructions and data to the processor 1503. A part of the memory 1504 may further include a non-volatile random access memory (non-volatile random access memory, NVRAM). The memory 1504 stores a processor and operation instructions, an executable module or a data structure, a subnet thereof, or an extended set thereof. The operation instructions may include various operation instructions to implement various operations.

The processor 1503 controls an operation of the communication device. During specific application, components of the communication device are coupled together through a bus system. In addition to a data bus, the bus system may further include a power bus, a control bus, and a status signal bus. However, for clear description, various types of buses in the figure are marked as the bus system.

The methods disclosed in embodiments of this application may be applied to the processor 1503, or be implemented by the processor 1503. The processor 1503 may be an integrated circuit chip, and has a signal processing capability. In an implementation process, steps in the foregoing methods may be implemented through a hardware integrated logic circuit in the processor 1503, or by using instructions in a form of software. The processor 1503 may be a general-purpose processor, a digital signal processor (digital signal processor, DSP), a microprocessor, or a microcontroller. The processor 1503 may further include an application-specific integrated circuit (application-specific integrated circuit, ASIC), a field programmable gate array (field programmable gate array, FPGA) or another programmable logic device, a discrete gate, or a transistor logic device, or a discrete hardware component. The processor 1503 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1504, and the processor 1503 reads information in the memory 1504 and completes the steps in the foregoing methods in combination with hardware in the processor 1503.

The receiver 1501 may be configured to receive input digital or character information, and generate a signal input related to a related setting and function control of the communication device. The transmitter 1502 may be configured to output digital or character information through a first interface. The transmitter 1502 may be further configured to send instructions to a disk group through the first interface, to modify data in the disk group. The transmitter 1502 may further include a display device, for example, a display.

In this embodiment of this application, in a case, the processor 1503 is configured to perform the method for training a neural network performed by the terminal device in the embodiment corresponding to FIG. 11. It should be noted that a specific manner in which the application processor 15031 in the processor 1503 performs the foregoing steps is based on a same concept as the method embodiments corresponding to FIG. 11 in this application. Technical effects brought by the specific manner are the same as those in the method embodiments corresponding to FIG. 11 in this application. For specific content, refer to the descriptions in the foregoing method embodiments in this application. Details are not described herein again.

An embodiment of this application further provides a computer-readable storage medium. The computer-readable storage medium stores a program used to perform signal processing. When the program runs on a computer, the computer is enabled to perform the steps performed by the communication device in the method described in the embodiments shown in FIG. 3 to FIG. 10, or the computer is enabled to perform the steps performed by the terminal device in the method described in the embodiment shown in FIG. 11.

An embodiment of this application further provides a computer program product. When the computer program product runs on a computer, the computer is enabled to perform the steps performed by the communication device in the method described in the embodiments shown in FIG. 3 to FIG. 10, or the computer is enabled to perform the steps performed by the terminal device in the method described in the embodiment shown in FIG. 11.

The first communication device or the terminal device that is provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the method for training a neural network described in the embodiments shown in FIG. 3 to FIG. 11. Optionally, the storage unit is a storage unit in the chip, for example, a register or a cache; or the storage unit may be a storage unit that is in the radio access device end and that is located outside the chip, for example, a read-only memory (read-only memory, ROM), another type of static storage device that can store static information and instructions, or a random access memory (random access memory, RAM).

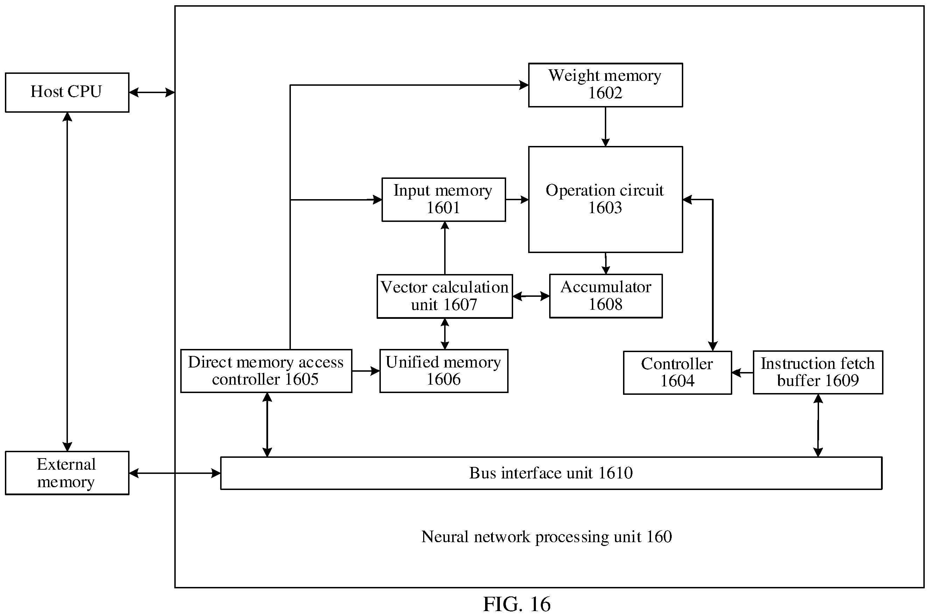

Specifically, refer to FIG. 16. FIG. 16 is a diagram of a structure of a chip according to an embodiment of this application. The chip may be represented as a neural network processing unit NPU 160. The NPU 160 is mounted to a host CPU (Host CPU) as a coprocessor, and the host CPU allocates a task. A core part of the NPU is an operation circuit 1603. The operation circuit 1603 is controlled by a controller 1604 to extract matrix data in a memory and perform a multiplication operation.

In some implementations, the operation circuit 1603 internally includes a plurality of processing units (Process Engine, PEs). In some implementations, the operation circuit 1603 is a two-dimensional systolic array. The operation circuit 1603 may be alternatively a one-dimensional systolic array or another electronic circuit that can perform mathematical operations such as multiplication and addition. In some implementations, the operation circuit 1603 is a general-purpose matrix processor.

For example, it is assumed that there is an input matrix A, a weight matrix B, and an output matrix C. The operation circuit fetches data corresponding to the matrix B from a weight memory 1602 and buffers the data on each PE in the operation circuit. The operation circuit fetches data of the matrix A from an input memory 1601, to perform a matrix operation with the matrix B to obtain a partial result or a final result of a matrix, and stores the result into an accumulator (accumulator) 1608.

A unified memory 1606 is configured to store input data and output data. Weight data is directly transferred to the weight memory 1602 through a direct memory access controller (Direct Memory Access Controller, DMAC) 1605. The input data is also transferred to the unified memory 1606 through the DMAC.

A BIU is a bus interface unit, namely, a bus interface unit 1610, and is configured to perform interaction between an AXI bus, and the DMAC and an instruction fetch buffer (Instruction Fetch Buffer, IFB) 1609.

The bus interface unit 1610 (Bus Interface Unit, BIU for short) is used by the instruction fetch buffer 1609 to obtain an instruction from an external memory, and further used by the direct memory access controller 1605 to obtain original data of the input matrix A or the weight matrix B from the external memory.

The DMAC is mainly configured to: transfer input data in an external memory DDR to the unified memory 1606, transfer the weight data to the weight memory 1602, or transfer the input data to the input memory 1601.

A vector calculation unit 1607 includes a plurality of operation processing units. When necessary, further processing is performed on an output of the operation circuit, such as vector multiplication, vector addition, exponential operation, logarithmic operation, and value comparison. The vector calculation unit 1607 is mainly used for non-convolutional/fully connected layer network calculation in a neural network, such as batch normalization (batch normalization), pixel-level summation, and upsampling of a feature map.

In some implementations, the vector calculation unit 1607 can store, into the unified memory 1606, a processed output vector. For example, the vector calculation unit 1607 may apply a linear function and/or a non-linear function to the output of the operation circuit 1603, for example, perform linear interpolation on a feature plane extracted at a convolutional layer. For another example, a linear function and/or a non-linear function is applied to a vector of an accumulated value to generate an activation value. In some implementations, the vector calculation unit 1607 generates a normalized value, a pixel-level sum, or a normalized value and a pixel-level sum. In some implementations, the processed output vector can be used as an activation input to the operation circuit 1603, for example, the processed output vector is used in a subsequent layer in the neural network.

The instruction fetch buffer (instruction fetch buffer) 1609 connected to the controller 1604 is configured to store instructions used by the controller 1604.

The unified memory 1606, the input memory 1601, the weight memory 1602, and the instruction fetch buffer 1609 are all on-chip memories. The external memory is private to a hardware architecture of the NPU.

An operation corresponding to the first computational graph may be performed by the operation circuit 1603 or the vector calculation unit 1607.

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a communication device, a network device, or the like) to perform the methods in embodiments of this application.

All or some of the foregoing embodiments may be implemented by software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a communication device, or a data center to another website, computer, communication device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a communication device or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Drive, SSD)), or the like.

## Claims

1. A method for training a neural network, wherein when an N^{th} round of training of the neural network is being performed, the method comprises:
Obtaining a first computational graph, wherein the first computational graph is one of one or more computational graphs corresponding to the N^{th} round of training of the neural network, and N is a positive integer;
Determining that a first compiled code corresponding to the first computational graph has been stored in a system, wherein the first compiled code is generated during execution of an M^{th} round of training of the neural network, M is a positive integer, and M is less than N; and
Executing the first compiled code.

2. The method according to claim 1, wherein the executing the first compiled code comprises:
obtaining a first mapping relationship from the system, wherein the first mapping relationship indicates an obtaining location of an input parameter of the first computational graph;
determining, based on the first mapping relationship, a value of the input parameter of the first computational graph corresponding to the Nth round of training; and
executing the first compiled code based on the value of the input parameter.

3. The method according to claim 2, wherein before the obtaining a first mapping relationship, the method comprises:
establishing the first mapping relationship if the first mapping relationship is absent in the system.

4. The method according to any one of claims 1 to 3, wherein the first computational graph is a reusable computational graph.

5. The method according to any one of claims 1 to 4, wherein the determining that a first compiled code corresponding to the first computational graph has been stored in a system comprises:
performing representation conversion on the first computational graph, to obtain an intermediate representation IR corresponding to the first computational graph; and
determining, based on the IR, that the first compiled code has been stored in the system.

6. The method according to any one of claims 1 to 5, wherein when the M^{th} round of training of the neural network is being performed, the method further comprises:
obtaining the first computational graph, and generating the first compiled code based on the first computational graph; and
storing the first compiled code in the system.

7. The method according to any one of claims 1 to 4, wherein the determining that a first compiled code corresponding to the first computational graph has been stored in a system comprises:
if the first mapping relationship has been stored in the system, determining that the first compiled code has been stored in the system, wherein the first mapping relationship indicates the obtaining location of the input parameter of the first computational graph.

8. The method according to any one of claims 1 to 7, wherein the first computational graph corresponds to a first step in the N^{th} round of training of the neural network;
after the executing the first compiled code, the method further comprises: generating first output data, wherein the first output data is of a first data structure, the first output data comprises at least one piece of input data of a second step in an operation of training the neural network, the first data structure is a data structure used for performing the second step in the operation of training the neural network, and the operation of training the neural network comprises the N^{th} round of training of the neural network;
and/or
the executing the first compiled code comprises: obtaining at least one piece of input data of the first computational graph based on a format of a second data structure, wherein the at least one piece of input data of the first computational graph exists in second output data of a third step in the operation of training the neural network, and the second data structure is a data structure used for performing the third step in the operation of training the neural network.

9. The method according to claim 8, wherein
a storage location of the first output data is consistent with a read location of the at least one piece of input data of the second step; and/or
a read location of the at least one piece of input data of the first computational graph is consistent with a storage location of the second output data.

10. The method according to claim 8, wherein the method further comprises:
sending the first output data by invoking a preset interface, wherein the second step in the operation of training the neural network comprises sending the first output data, and the first data structure is a data structure used for performing an operation of sending the first output data.

11. The method according to any one of claims 1 to 10, wherein before the obtaining a first computational graph, the method further comprises:
performing, based on a preset policy input by a user, a partitioning operation on a second computational graph to obtain the one or more computational graphs corresponding to the N^{th} round of training of the neural network; or
receiving the one or more computational graphs that are input by a user and that correspond to the N^{th} round of training of the neural network.

12. An apparatus for training a neural network, wherein when an N^{th} round of training of the neural network is being performed, the apparatus comprises:
an obtaining module, configured to obtain a first computational graph, wherein the first computational graph is one of one or more computational graphs corresponding to the N^{th} round of training of the neural network, and N is a positive integer;
a determining module, configured to determine that a first compiled code corresponding to the first computational graph has been stored in a system, wherein the first compiled code is generated during execution of an M^{th} round of training of the neural network, M is a positive integer, and M is less than N; and
an execution module, configured to execute the first compiled code.

13. The apparatus according to claim 12, wherein the execution module is specifically configured to:
obtain a first mapping relationship from the system, wherein the first mapping relationship indicates an obtaining location of an input parameter of the first computational graph;
determine, based on the first mapping relationship, a value of the input parameter of the first computational graph in the N^{th} round; and
execute the first compiled code based on the value of the input parameter.

14. The apparatus according to claim 13, wherein
the apparatus further comprises: an establishment module, configured to establish the first mapping relationship if the first mapping relationship is absent in the system.

15. The apparatus according to any one of claims 12 to 14, wherein the first computational graph is a reusable computational graph.

16. The apparatus according to any one of claims 12 to 15, wherein the determining module is specifically configured to:
perform representation conversion on the first computational graph, to obtain an intermediate representation IR corresponding to the first computational graph; and
determine, based on the IR, that the first compiled code has been stored in the system.

17. The apparatus according to any one of claims 12 to 16, wherein when the M^{th} round of training of the neural network is being performed, the obtaining module is further configured to: obtain the first computational graph, and generate the first compiled code based on the first computational graph; and
the apparatus further comprises: a storage module, configured to store the first compiled code in the system.

18. The apparatus according to any one of claims 12 to 15, wherein
the determining module is specifically configured to: if the first mapping relationship has been stored in the system, determine that the first compiled code has been stored in the system, wherein the first mapping relationship indicates the obtaining location of the input parameter of the first computational graph.

19. The apparatus according to any one of claims 12 to 18, wherein the first computational graph corresponds to a first step in the N^{th} round of training of the neural network;
the apparatus further comprises: a generation module, configured to: generate first output data, wherein the first output data is of a first data structure, the first output data comprises at least one piece of input data of a second step in an operation of training the neural network, the first data structure is a data structure used for performing the second step in the operation of training the neural network, and the operation of training the neural network comprises the N^{th} round of training of the neural network;
and/or
the execution module is specifically configured to: obtain at least one piece of input data of the first computational graph based on a format of a second data structure, wherein the at least one piece of input data of the first computational graph exists in second output data of a third step in the operation of training the neural network, and the second data structure is a data structure used for performing the third step in the operation of training the neural network.

20. The apparatus according to claim 19, wherein
a storage location of the first output data is consistent with a read location of the at least one piece of input data of the second step; and/or
a read location of the at least one piece of input data of the first computational graph is consistent with a storage location of the second output data.

21. The apparatus according to claim 19, wherein the apparatus further comprises:
a sending module, configured to send the first output data by invoking a preset interface, wherein the second step in the operation of training the neural network comprises sending the first output data, and the first data structure is a data structure used for performing an operation of sending the first output data.

22. The apparatus according to any one of claims 12 to 21, wherein
the apparatus further comprises: a partition module, configured to perform, based on a preset policy input by a user, a partitioning operation on a second computational graph to obtain the one or more computational graphs corresponding to the N^{th} round of training of the neural network; or
the apparatus further comprises: a receiving module, configured to receive the one or more computational graphs that are input by a user and that correspond to the N^{th} round of training of the neural network.

23. A computer-readable storage medium, wherein the computer-readable storage medium stores a program, and when the program is run on a computer, the computer is enabled to perform the method according to any one of claims 1 to 11.

24. A communication device, comprising a processor and a memory, wherein the processor is coupled to the memory;
the memory is configured to store a program; and
the processor is configured to execute the program in the memory, to enable the communication device to perform the method according to any one of claims 1 to 11.

25. A computer program product, wherein the computer program product comprises a program, and when the program is run on a computer, the computer is enabled to perform the method according to any one of claims 1 to 11.
